(19) Europäisches Patentamt
European Patent Office
Office européen des brevets

(11) **EP 4 292 420 A2**

(12) **EUROPÄISCHE PATENTANMELDUNG**

(43) Veröffentlichungstag:
**20.12.2023 Patentblatt 2023/51**

(21) Anmeldenummer: **23207906.1**

(22) Anmeldetag: **04.04.2019**

(51) Internationale Patentklassifikation (IPC):
***A01D 34/00*** *(2006.01)*

(52) Gemeinsame Patentklassifikation (CPC):
**A01B 51/026; A01B 69/008; A01M 7/0082; A01M 7/0089**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **05.04.2018 DE 102018108024**

(62) Dokumentnummer(n) der früheren Anmeldung(en) nach Art. 76 EPÜ:
**19718077.1 / 3 772 879**

(71) Anmelder: **Horsch Maschinen GmbH 92421 Schwandorf (DE)**

(72) Erfinder: **Horsch, Michael 92421 Schwandorf (DE)**

(74) Vertreter: **v. Bezold & Partner Patentanwälte - PartG mbB Ridlerstraße 57 80339 München (DE)**

Bemerkungen:
Diese Anmeldung ist am 06-11-2023 als Teilanmeldung zu der unter INID-Code 62 erwähnten Anmeldung eingereicht worden.

(54) **AUTONOMES LANDWIRTSCHAFTLICHES TRÄGERFAHRZEUG**

(57) Es ist ein autonomes landwirtschaftliches Trägerfahrzeug (10), zum Tragen von zumindest einem landwirtschaftlichen Arbeitsgerät (24) offenbart, mit einer Rahmenkonstruktion (20), und einem an der Rahmenkonstruktion (20) angebrachten Fahrwerk (12), wobei das Fahrwerk (12) zumindest zwei lenkbare Räder und/oder Raupenfahrwerke (14) aufweist, wobei der Rahmenkonstruktion (20) zumindest eine Montagevorrichtung (22) zur Verbindung mit dem zumindest einem landwirtschaftlichen Arbeitsgerät (24) zugeordnet ist, und mit einer Umfeldsensorik (40) zur Ermittlung von im Umfeld des Trägerfahrzeug (10) vorhandenen Hindernissen und/oder Elementen, sowie mit einer Steuereinrichtung (36) zum Steuern des Trägerfahrzeug (10) und/oder des zumindest einen Arbeitsgerät (24), wobei die Steuereinrichtung (36) mit einem, eine Position erfassenden und/oder ausgebenden Positionsbestimmungssystem (38) verbindbar ist, um ein autonomes landwirtschaftliches Trägerfahrzeug (10) zu schaffen, bei welchem die Schlagkraft nicht verringert wird, kein zusätzliches Zugfahrzeug für die Arbeitsgeräte (24) benötigt wird, und darüber hinaus keine Bedienperson während einer Feldarbeit zwingend erforderlich ist vorgesehen, dass in der Steuereinrichtung (36) vorzugsweise positionsabhängige Arbeitsanweisungen für das Trägerfahrzeug (10) hinterlegt sind.

Die Erfindung betrifft zudem ein Verfahren zur Steuerung und/oder Regelung eines autonomen Trägerfahrzeugs.

Fig. 1A

EP 4 292 420 A2

**Beschreibung**

Die vorliegende Erfindung betrifft ein autonomes landwirtschaftliches Trägerfahrzeug mit den Merkmalen des unabhängigen Anspruch 1. Die Erfindung betrifft zudem ein Verfahren zur Steuerung und/oder Regelung eines autonomen Trägerfahrzeugs mit den Merkmalen des unabhängigen Anspruchs 22.

Im Bereich der landwirtschaftlichen Maschinen finden zunehmend autonom betriebene Systeme Verwendung. Wobei hierbei bislang insbesondere zwei Arten von autonomen landwirtschaftlichen Maschinen bekannt wurden.

Eine erste Art beschreibt hierbei Feldroboter, mittels derer bspw. eine Reihe von Pflanzen behandelt werden kann oder mittels derer bspw. in einer Reihe Saatgut- und/oder Verteilgut ausgebracht werden kann. Um eine, durch die in der Regel in der Landwirtschaft vorhandenen engen Zeitfenster hervorgerufene, große Schlagkraft mit derartigen autonomen Maschinen zu erreichen, werden hierbei eine Vielzahl derartiger Feldroboter auf einer landwirtschaftlichen Fläche, wie bspw. einer Ackerfläche eingesetzt, wodurch jedoch die Kosten und zudem der Wartungsaufwand entsprechend steigen. Darüber hinaus benötigt eine derartig große Anzahl an Feldroboter aufwendige Logistikkonzepte um alle Feldroboter zum erforderlichen Zeitpunkt mit dem entsprechenden Verteilgut zu versorgen, aber auch um diese mit den jeweils erforderlichen Betriebsstoffen zu versorgen.

Eine zweite Art beschreibt zudem autonome Zugfahrzeuge, insbesondere autonome Traktoren. So sind autonome Zugfahrzeuge bekannt an welchen Zugfahrzeugen über eine Zugdeichsel bzw. über eine Anhängevorrichtung angehängte Arbeitsgeräte angehängt werden können. Bei den Arbeitsgeräten handelt es sich hierbei um Handelsübliche Maschinen wie bspw. Sägeräte oder Bodenbearbeitungsgeräte oder dergl. Nachteilig an derartigen Maschinenkombinationen ist jedoch, dass hierbei jeweils ein Zugfahrzeug und ein Arbeitsgerät mit eigenen Fahrwerken benötigt werden, was wiederum entsprechend teuer und aufwendig ist. Darüber hinaus müssen bei derartigen Maschinenkombinationen jeweils sowohl die Zugfahrzeuge als auch die Arbeitsgeräte mit Sensorik und Steuereinrichtungen derartig ausgestattet werden, dass diese den in der Landwirtschaft geforderten Sicherheitsanforderungen genügen. Dies führt jedoch zu aufwendigen Steuereinrichtungen und somit wieder zu einer hohen Störanfälligkeit. Auch benötigen derartige Maschinenkombinationen aufwendige Kommunikationseinrichtungen um jeweils bei Störungen des Arbeitsgerätes das Zugfahrzeug entsprechend ansteuern zu können und umgekehrt. Ein weiterer Nachteil besteht darin, dass es mitunter nur bedingt möglich ist, dass Zugfahrzeug und das Arbeitsgerät ohne Einwirkung durch eine Bedienperson in einer gleichen Fahrspur zu führen, auch hierfür werden wiederum aufwendige Steuerungs- und Regelungssysteme benötigt.

Eine weitere Ausgestaltungsmöglichkeit von landwirtschaftlichen Maschinen sieht darüber hinaus vor, Selbstfahrende landwirtschaftliche Arbeitsgeräte bzw. Selbstfahrende landwirtschaftliche Maschinen wie bspw. Mähdrescher oder Pflanzenschutzspritzen teilweise autonom auszuführen. Dies bedeutet, dass einige Funktionen derartiger Maschinen mittels einer Steuereirichtung autonom durchgeführt werden. Die Maschinen sind aber dennoch mit einem Bedienplatz für eine Bedienperson ausgestattet, so dass die Bedienperson bei evtl. Fehlfunktionen noch reagieren kann. Die Steuereinrichtungen sind hierbei jeweils derartig ausgeführt, dass eine Bedienperson an der Maschine anwesend sein muss um Fehlfunktionen zu vermeiden bzw. um bei Fehlfunktionen einzugreifen. Zwar kann somit die Arbeit für eine Bedienperson wesentlich vereinfacht werden, da aber dennoch jederzeit eine Bedienperson an der Maschine anwesend sein muss, kann die durch autonome Fahrzeuge gewünschte Personaleinsparung nicht erreicht werden, wodurch sich die mitunter aufwendigen Steuereinrichtungen an derartigen selbstfahrenden Maschinen bzw. Arbeitsgeräten nicht lohnen.

Ziel der vorliegenden Erfindung ist es somit, ein autonomes landwirtschaftliches Trägerfahrzeug zu schaffen, bei welchem die Schlagkraft nicht verringert wird, kein zusätzliches Zugfahrzeug für die Arbeitsgeräte benötigt wird, und darüber hinaus keine Bedienperson während einer Feldarbeit zwingend bzw. dauerhaft erforderlich ist.

Diese Aufgaben werden gelöst durch ein autonomes landwirtschaftliches Trägerfahrzeug mit den Merkmalen des unabhängigen Anspruch 1, sowie durch ein Verfahren zur Steuerung und/oder Regelung eines autonomen Trägerfahrzeugs. Vorteilhafte Weiterbildungen sind in den abhängigen Ansprüchen und der Beschreibung angegeben.

Zur Lösung der vorgenannten Aufgaben schlägt die Erfindung ein autonomes landwirtschaftliches Trägerfahrzeug, zum Tragen von zumindest einem landwirtschaftlichen Arbeitsgerät, mit einer Rahmenkonstruktion, und einem an der Rahmenkonstruktion angebrachten Fahrwerk vor, wobei das Fahrwerk zumindest zwei lenkbare Räder und/oder Raupenfahrwerke aufweist.

Um kein zusätzliches Zugfahrzeug zu benötigen sowie um die Schlagkraft nicht zu verringern ist vorgesehen, dass der Rahmenkonstruktion zumindest eine Montagevorrichtung zur Verbindung mit dem zumindest einen landwirtschaftlichem Arbeitsgerät zugeordnet ist. Darüber hinaus ist an dem Trägerfahrzeug und/oder am zumindest einen Arbeitsgerät eine Umfeldsensorik vorhanden, welche zur Ermittlung von im Umfeld des Trägerfahrzeug vorhandenen Hindernissen und/oder Elementen dient, zum Steuern des Trägerfahrzeug und/oder des zumindest einen Arbeitsgerät ist an diesen eine Steuereinrichtung vorgesehen, wobei die Steuereinrichtung mit einem, eine Position erfassenden und/oder ausgebenden Positionsbestimmungssystem verbindbar ist, bzw. wobei die Steuereinrichtung mit einem eine Position erfassenden und/oder ausgebenden Positionsbestimmungssystem ausgestattet sein kann.

Um ein autonomes Trägerfahrzeug zu schaffen, bei welchem keine Bedienperson während einer Feldarbeit zwingend erforderlich ist, bzw. dauerhaft anwesend sein muss, ist vorgesehen, dass in der Steuereinrichtung vorzugsweise positionsabhängige Arbeitsanweisungen für das Trägerfahrzeug hinterlegt sind.

Das erfindungsgemäße landwirtschaftliche Trägerfahrzeug dient insbesondere zum Tragen von zumindest einem landwirtschaftlichen Arbeitsgerät. Darüber hinaus kann das autonome Trägerfahrzeug auch zur Führung von zumindest einem landwirtschaftlichen Arbeitsgerät über einer landwirtschaftlichen Fläche dienen, wobei das Trägerfahrzeug und das zumindest eine Arbeitsgerät eine feste Verbindung aufweisen, d.h. dass diese für eine Transportfahrt auf einer öffentlichen Straße nicht zwingend voneinander getrennt werden müssen, sowie dass diese nicht über eine Zugdeichsel bzw. über eine Anhängevorrichtung verbunden werden.

Erfindungsgemäß weißt das Arbeitsgerät somit insbesondere kein zusätzliches Fahrwerk für einen Straßentransport auf, sondern das Fahrwerk ist jeweils am Trägerfahrzeug derartig ausgeführt das am zumindest einen Arbeitsgerät kein zusätzliches Fahrwerk zwingend erforderlich ist. Es kann jedoch am zumindest einen Arbeitsgerät bspw. ein Stützrad oder dergl. derartig angebaut sein, dass die Fahreigenschaften während einer Transportfahrt verbessert werden können.

Beim zumindest einem landwirtschaftlichen Arbeitsgerät, kann es sich bspw. um eine Verteilmaschine bspw. in Form einer Feldspritze und/oder ein Sägerät handeln. Auch kann es sich beim zumindest einem Arbeitsgerät um einen Düngerstreuer handeln. Des Weiteren kann es sich beim Arbeitsgerät bspw. um einen Transportbehälter handeln, so dass das Trägerfahrzeug bspw. einen Überladewagen bildet. Auch können am Trägerfahrzeug Bodenbearbeitungswerkzeuge bzw. Bodenbearbeitungsgeräte als Arbeitsgeräte angebracht werden. Auch können als Arbeitsgeräte Schneidwerkzeuge wie Schneidwerke oder Mähwerke oder dergl. verwendet werden. Generell sind somit jegliche in der Landwirtschaft bekannten Arbeitsgeräte und/oder Arbeitswerkzeuge denkbar.

Das autonome landwirtschaftliche Trägerfahrzeug umfasst eine Rahmenkonstruktion, an welcher insbesondere die Komponenten und Baugruppen des Trägerfahrzeugs angebaut sein können und an welcher die Montagevorrichtungen angebracht sind. Die Rahmenkonstruktion kann zudem ein- oder mehrteilig ausgeführt sein. Die Verbindung der Rahmenkonstruktion kann zudem kraft- form und/oder stoffschlüssig erfolgen. Die kraft- und/oder formschlüssige Verbindung kann beispielsweise Schraub-, Niet- und/oder Klemmverbindungen oder dergleichen umfassen. Die stoffschlüssige Verbindung kann beispielsweise Schweiß-, Kleb- und/oder Lötverbindungen oder dergleichen umfassen. Wahlweise wären zudem Kombinationen einer kraft-, form- und/oder stoffschlüssigen Verbindung denkbar.

Zur Fortbewegung ist dem autonomen landwirtschaftlichen Trägerfahrzeug ein Fahrwerk zugeordnet, wobei sich das Fahrwerk aus zumindest zwei gegenüberliegenden Rädern und/oder Raupenfahrwerken zusammensetzt. In einer Ausführungsvariante kann sich das Fahrwerk aus zwei insbesondere gegenüberliegenden Raupenfahrwerken zusammensetzen welche zudem lenkbar sein können. Es sei hierbei angemerkt dass unter dem Begriff Raupenfahrwerk jegliche Gleiskettenfahrzeuge mit inbegriffen sein können, also auch Kettenlaufwerke oder Bandlaufwerke aus Gummi und/oder Kunststoff oder dergl.

Die Räder und/oder Raupenfahrwerke können bspw. um eine aufrechte Achse schwenkbar an der Rahmenkonstruktion gelagert bzw. angeordnet und somit lenkbar sein. Zur Lenkung der Räder und/oder Raupenfahrwerke könnten hierbei verschiedenste Stellelemente vorgesehen sein, bspw. elektrische und/oder hydraulische und/oder pneumatische Stellelemente, wie bspw. Lenkzylinder. Wobei die Stellelemente wiederum mittels einer Steuereinrichtung angesteuert bzw. betätigt werden können. Die Räder und/oder Raupenfahrwerke bzw. insbesondere die Raupenfahrwerke können aber auch mittels entsprechender Schaltgetriebe und/oder Lenkgetriebe und/oder Überlagerungslenkgetriebe lenkbar sein.

In einer weiteren Ausführungsvariante kann das Fahrwerk zumindest vier Räder umfassen welche jeweils auf zwei hintereinander angeordneten Achsen verteilt sind, und von denen wiederum zumindest zwei Räder lenkbar sind, auch könnten jedoch alle Räder lenkbar sein.

Es sei hierbei angemerkt das die Räder einer Achse nicht zwingend bspw. mechanisch verbunden sein müssen, sondern das eine Achse durch zumindest zwei gegenüberliegende Räder und/oder Raupenfahrwerke ausgebildet wird, auch wenn diese keine direkte Verbindung aufweisen.

Auch könnten die Räder des Fahrwerks bzw. zumindest einige der Räder des Fahrwerks als Zwillingsbereifung ausgeführt sein.

Auch könnte das Fahrwerk aus zumindest zwei gegenüberliegenden Rädern und zwei gegenüberliegenden Raupenfahrwerken, welche in Fahrtrichtung vor oder nach den Rädern angeordnet sein können zusammengesetzt sein. Wobei in einer derartigen Ausführungsvariante zumindest die Räder und/oder die Raupenfahrwerke lenkbar sein können, vorzugsweise jedoch die Räder. Zudem können sowohl die Räder als auch die Raupenfahrwerke angetrieben sein, oder nur die Räder oder die Raupenfahrwerke.

Auch könnte das Fahrwerk zwei oder mehr Achsen aufweisen, wobei zumindest die Räder und/oder Raupenfahrwerke von einer Achse lenkbar ausgeführt sind. Auch könnten bspw. die Räder und/oder Raupenfahrwerke der vordersten und der hintersten Achse lenkbar ausgeführt sein. Auch kann die Lenkung als Zweiradlenkung und/oder als Hinterradlenkung und/oder als Allradlenkung ausgeführt sein.

In einer weiteren Ausführungsvariante könnte das Fahrwerk auch ein Dreirad ausbilden, wobei in einer derartigen Ausführung die Räder und/oder die Raupenfahrwerke entsprechend angeordnet sein können. Auch könnte das Dreirad ein einzelnes Rad und/oder Raupenfahrwerk und diesem nach- oder vorgeordnet ein, zwei oder mehr Achsen von Räder und/oder Raupenfahrwerke umfassen.

Insbesondere ist das Fahrwerk bzw. die Anordnung der Räder und/oder Raupenfahrwerke des Trägerfahrzeugs jeweils derartig ausgeführt dass das Arbeitsgerät kein Fahrwerk benötigt, sondern dass das Arbeitsgerät nur Tiefenführungsräder aufweisen kann.

Das Fahrwerk bzw. dessen Räder und/oder Raupenfahrwerke können höhenverstellbar zur Rahmenkonstruktion sein. Wobei die Räder und/oder Raupenfahrwerke hierfür bspw. mittels einer Einzelradaufhängung an der Rahmenkonstruktion bzw. am Fahrwerk angebracht sein können. Auch könnten die Räder und/oder Raupenfahrwerke hierfür bspw. mittels eines sog. Federbeins an der Rahmenkonstruktion bzw. am Fahrwerk angebracht sein. Auch andere Aufhängungsvorrichtungen wären denkbar. Zur Höhenverstellung der Räder und/oder Raupenfahrwerke bzw. der Einzelradaufhängungen oder der Federbeine oder der Aufhängungsvorrichtung könnten verschiedenste Stellelemente vorgesehen sein, bspw. elektrische und/oder hydraulische und/oder pneumatische Stellelement bspw. Hydraulisch betätigte bzw. angetriebene Zylinder. Wobei die Stellelemente wiederum mittels einer Steuereinrichtung angesteuert bzw. betätigt werden können. Die jeweils erforderliche Höhe des Trägerfahrzeugs kann wiederum als positionsabhängige Arbeitsanweisung in der Steuereinrichtung hinterlegt sein. Es wäre jedoch auch denkbar das am Trägerfahrzeug und/oder am Arbeitsgerät Sensoren oder dergl. Messmittel angebracht sind mittels denen jeweils das Umfeld, insbesondere eine Pflanzenhöhe der landwirtschaftlichen Nutzfläche erfasst wird und wiederum auf Basis dieser Pflanzenhöhe die Höhe entsprechend durch Ansteuerung mittels der Steuereinrichtung variiert wird.

Darüber hinaus kann die jeweilige Spurweite des Fahrwerks verstellbar sein. Auch kann das Fahrwerk im sog. Hundegang betrieben werden. Hierfür könnten die Räder und/oder Raupenfahrwerke mittels Linearführungen an der Rahmenkonstruktion und/oder am Fahrwerk angebracht sein. Auch andere Führungen wären denkbar. Zur Verstellung der Spurweite der Räder und/oder Raupenfahrwerke könnten hierbei verschiedenste Stellelemente vorgesehen sein, bspw. elektrische und/oder hydraulische und/oder pneumatische Stellelemente bspw. hydraulisch betätigte bzw. angetriebene Zylinder. Wobei die Stellelemente wiederum mittels einer Steuereinrichtung angesteuert bzw. betätigt werden können. Die jeweils erforderliche Spurweite des Trägerfahrzeugs kann wiederum als positionsabhängige Arbeitsanweisung in der Steuereinrichtung hinterlegt sein. Es wäre jedoch auch denkbar das am Trägerfahrzeug und/oder am Arbeitsgerät Sensoren oder dergl. Messmittel angebracht sind mittels denen jeweils das Umfeld insbesondere die jeweiligen Fahrspuren erfasst werden und wiederum auf Basis dieser Spurweide die Fahrspur entsprechend mittels der Steuereinrichtung variiert wird.

Zumindest ein Teil der Räder und/oder Raupenfahrwerke kann angetrieben sein. Insbesondere sind jedoch zumindest zwei Räder und/oder Raupenfahrwerke jeweils angetrieben. Hierfür ist am autonomen Trägerfahrzeug zumindest eine Antriebseinheit mit einem Antriebsstrang vorgesehen, mittels welches Antriebsstrangs das Fahrwerk mit verschiedenen Fahrgeschwindigkeiten betrieben werden kann. Als Antrieb kann bspw. ein Verbrennungsmotor eingesetzt werden, es wären jedoch auch hydraulische und/oder elektrische Antriebseinheiten denkbar. Auch ein Hybridantrieb wäre denkbar, so dass bspw. als Antriebseinheit ein Verbrennungsmotor eingesetzt wird, die übrigen Komponenten des Antriebsstrangs jedoch elektrisch betrieben werden können. Hierbei könnten bspw. sog. Dieselelektrische Antriebe zum Einsatz kommen.

Denkbar wären jedoch auch rein elektrische und/oder hydraulische Antriebsstränge welche keinen Verbrennungsmotor benötigen.

Zudem kann der Antriebsstrang entsprechende Radnabenmotoren umfassen. Auch könnten bspw. zwei gegenüberliegende Räder und/oder Raupenfahrwerke mittels Gelenk- oder Antriebswellen verbunden sein, welche wiederum Bestandteil des Antriebsstrangs sind.

In einer Weiterbildung der Erfindung können die Räder und/oder Raupenfahrwerke eine Anordnung und/oder eine Breite aufweisen, welche an die Anordnung der Arbeitswerkzeuge des zumindest einen Arbeitsgerät angepasst sind. So das bspw. die Räder und/oder Raupenfahrwerke bzw. deren Fahrspuren zwischen zwei Arbeitswerkzeugen oder seitlich neben einem Arbeitswerkzeug sich befinden, bzw. entlang der landwirtschaftlichen Nutzfläche geführt werden.

Zur Montage bzw. zur insbesondere festen Verbindung des zumindest einen Arbeitsgerätes mit der Rahmenvorrichtung bzw. mit dem Trägerfahrzeug ist der Rahmenkonstruktion zumindest eine Montagevorrichtung zugeordnet. Bei der Montagevorrichtung kann es sich insbesondere um eine sog. 2-Punkt Aufnahme und/oder um eine 3-Punkt Aufnahme handeln. Somit kann erreicht werden, dass das zumindest eine Arbeitsgerät zumindest in Fahrtrichtung abschnittweise fest mit der Rahmenkonstruktion verbunden ist. Dies hat gegenüber den aus dem Stand der Technik bekannten Zugfahrzeugen mit Anhängevorrichtung bspw. in Form eines Zugpendel den Vorteil, dass das zumindest eine Arbeitsgerät und das autonome Trägerfahrzeug eine feste Einheit bilden.

Auch kann es sich bei der Montagevorrichtung um einen Zweipunkt - Kraftheber und/oder Dreipunkt - Kraftheber und/oder doppelten Zweipunkt - Kraftheber handeln.

Mittels der Montagevorrichtung wird somit, dass zumindest eine Arbeitsgerät über zumindest zwei und/oder drei Punkte mit dem Trägerfahrzeug verbunden. Auch kann die Montagevorrichtung vier Punkte umfassen, so dass das Arbeitsgerät bspw. mittels eines Parallelogramms mit dem Trägerfahrzeug verbunden werden kann.

Darüber hinaus kann die Montagevorrichtung zumindest ein elektrisches und/oder hydraulisches und/oder pneumatisches Stellelement wie bspw. einen Zylinder oder einen Spindelantrieb oder dergl. umfassen.

Die Verbindung zwischen dem Trägerfahrzeug und dem zumindest einem Arbeitsgerät mittels der Montagevorrichtung kann so ausgeführt sein, dass das Arbeitsgerät in dessen Höhe verstellbar ist. Zudem kann die Montagevorrichtung so ausgeführt sein, das eine Verstellung des Arbeitsgerätes in Fahrtrichtung nicht bzw. nur um einen geringen Winkel möglich ist, wobei der Winkel insbesondere kleiner als 25° oder 15° oder 5° ist, hierfür kann zudem das Arbeitsgerät mittels zumindest einer aufrecht verlaufenden Achse mit dem Trägerfahrzeug verbunden werden. Wobei diese Höhenverstellung und/oder diese Winkelverstellung bspw. mittels der, der Montagevorrichtung zugeordnete Stellelemente erfolgen kann aber auch mittels dem Arbeitsgerät zugeordneter elektrischen und/oder hydraulischen und/oder pneumatischen Stellelementen wie bspw. Zylinder oder Spindelantriebe erfolgen kann.

Um während einer Feldarbeit unvorhersehbare bzw. nicht in der Steuereinrichtung bzw. in den Arbeitsanweisungen hinterlegte Hindernisse und/oder Elemente zu erfassen, ist am Trägerfahrzeug und/oder am zumindest einem landwirtschaftlichen Arbeitsgerät eine Umfeldsensorik vorgesehen. Die Umfeldsensorik ist hierbei derartig ausgeführt, dass mittels dieses der gesamte Arbeitsbereich des zumindest einen landwirtschaftlichen Arbeitsgeräts überwacht bzw. erfasst werden kann.

Mittels der Umfeldsensorik können somit bspw. Hindernisse wie Bäume, Büsche oder dergl. pflanzliche Hindernisse und/oder Elemente erfasst werden insbesondere jedoch auch Lebewesen wie Tiere und/oder Menschen.

Als Umfeldsensoren können hierbei bspw. Laserscanner und/oder Kamerasysteme wie bspw. 3D Wärmebildkameras eingesetzt werden. Auch können 3D-Kameras und/oder 3D-Scanner und/oder 3D-Rig verwendet werden. Auch Infrarotsensoren könnten entsprechend zum Einsatz kommen. Insbesondere kommen jeweils zwei Umfeldsensoren zum Einsatz. Auch können die zwei Umfeldsensoren verschiedene Objekte erkennen, so dass anhand dieser wiederum ein gemeinsames Bild mittels bspw. einer Steuereinrichtung ermittelt werden kann. So kann auch vorgesehen sein, dass die zwei Umfeldsensoren verschiedene physikalische Messeigenschaften aufweisen bzw. verschiedene physikalische Eigenschaften erfassen können.

Anhand der bspw. verschiedenen physikalischen Eigenschaften bzw. auf Basis der mittels der Umfeldsensorik erfassten Objekteigenschaften kann anschließend eine Auswertung über die Art des Hindernis und/oder Elemente erfolgen. Die Art kann hierbei bspw. eine Auswertung über Lebewesen oder Pflanze sein. Aber auch ober das Hindernis und/oder Elemente, mittels des Trägerfahrzeugs überfahren werden können / dürfen oder nicht, d.h. handelt es sich bspw. um eine kleine Pflanze kann diese überfahren werden, handelt es sich jedoch um eine Lebewesen darf dieses nicht überfahren werden.

Darüber hinaus kann vorgesehen sein, dass in der Steuereinrichtung Sollwerte für die durch die Umfeldsensorik ermitteltet Art des Hindernis und/oder Elements hinterlegt sind. So können bspw. Temperaturvorgaben hinterlegt sein, auf Basis derer die Auswertung erfolgt ob es sich um Lebewesen oder Pflanzen handelt. Auch können, Bewegungsparameter hinterlegt sein, so dass wiederum auf Basis einer definierten Bewegung eine Auswertung erfolgt ob es sich um Lebewesen oder Pflanzen handelt. Auch Konturparameter können hinterlegt sein, mittels derer bspw. eine Auswertung folgen kann um welche Art Lebewesen oder Pflanze es sich handelt, insbesondere welche Größe das Hindernis und/oder Element aufweist.

Um die jeweiligen Komponenten des Trägerfahrzeug bzw. des zumindest einen Arbeitsgeräts jeweils zu Steuern ist zumindest eine Steuereinrichtung vorgesehen. Die Steuereinrichtung dient zudem auch zur Regelung des Trägerfahrzeug bzw. des zumindest einen Arbeitsgerät.

Es sei hierbei darauf hingewiesen, dass die Begriffe "Steuereinrichtung" und "Regelungseinrichtung" sich auf elektronische und/oder mechanische und/oder pneumatische und/oder hydraulische Steuerungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" mit umfasst sein. Ebenso kann bei Verwendung des Begriffs "Regelung" gleichsam auch eine "Steuerung" damit umfasst sein.

Die Steuereinrichtung kann hierbei insbesondere mit einer elektrischen und/oder pneumatischen und/oder hydraulischen und/oder einer Kombination dieser Energie- und Signalübertragungsarten basierenden Steuerung und/oder Schaltung in Wirkverbindung stehen oder diese mit umfassen bzw. beinhalten. Bspw. kann zur Ansteuerung der Steuerelemente ein elektrisches BUS-System wie bspw. ein CAN-Bus System vorgesehen sein. Auch drahtlose Kommunikationsschnittstellen, wie bspw. WLAN Verbindungen wären denkbar.

Die Steuereinrichtung kann zudem eine oder mehrere Rechnereinheit(en) umfassen, in welchen Rechnereinheiten Steuerungsprogramme bzw. ein entsprechender Regelungsalgorithmus hinterlegt sein kann. Auch kann bspw. dem Trägerfahrzeug und dem zumindest einem Arbeitsgerät eine Rechnereinheit bzw. eine Steuereinrichtung zugeordnet sein, welche jedoch wiederum durch die Koppelung eine Steuereinrichtung bilden können.

In einer Weiterbildung der Erfindung könnte die Montagevorrichtung zur festen Verbindung der elektrischen und/oder pneumatischen und/oder hydraulischen Elemente des Trägerfahrzeug und des zumindest einen Arbeitsgeräts zudem entsprechende Schnittstellen aufweisen. Durch die Verbindung bzw. Koppelung mittels der Montagevorrichtung bzw. dessen Schnittstellen entsteht somit wiederum eine Steuereinrichtung.

Um die Istposition des Trägerfahrzeugs zu erfassen oder auszugeben kann dieses, bzw. kann die Steuereinrichtung mit einem Positionsbestimmungssystem verbunden werden, bzw. verbindbar sein. Hierzu kann der Steuereinrichtung zudem eine Empfang- und/oder Sendeeinheit zur Verbindung mit diesem zugeordnet sein. Beim Positionsbestimmungssystem kann es sich bspw. um ein GPS-System (Globales Positionsbestimmungssystem) handeln. Darüber hinaus wären jedoch noch weitere bzw. andere Positionsbestimmungssysteme denkbar bzw. verwendbar, bspw. das russische GLONASS System und/oder das System der europäischen Union GALILEO und/oder das chinesische BEIDOU System und/oder das indische INDIAN REGIONAL NAVIGATION SATELLITE SYSTEM und/oder das japanische QUASI-ZENIT-SATELLITEN-SYSTEM. Auch andere Positionsbestimmungssysteme wären denkbar bzw. einsetzbar. Wobei mit dem Positionsbestimmungssystem jeweils die aktuelle Istposition des Trägerfahrzeugs auf einer insbesondere landwirtschaftlichen Nutzfläche ermittelt bzw. erfasst werden kann und bspw. an die Steuereinrichtung übermittelt werden kann, bzw. die Istposition des Trägerfahrzeug mittels des Positionsbestimmungssystem an eine von diesem beabstandeten Ausgabegerät bzw. Eingabegerät wie bspw. ein mobiles Endgerät oder eine Rechnereinheit oder dergl. ausgegeben werden kann.

Um ein autonomes Trägerfahrzeug zu schaffen, bei welchem keine Bedienperson während einer Feldarbeit zwingend erforderlich ist bzw. dauerhaft anwesend sein muss, ist vorgesehen, dass in der Steuereinrichtung vorzugsweise positionsabhängige Arbeitsanweisungen für das Trägerfahrzeug und/oder das zumindest eine Arbeitsgerät hinterlegt sind.

Die Arbeitsanweisungen können hierbei insbesondere Sollwertvorgaben für die Lenkung und/oder die Fahrgeschwindigkeit beinhalten. Auch können die Arbeitsanweisungen noch weitere Sollwertvorgaben für weitere Elemente bzw. Stellelemente des Trägerfahrzeugs umfassen. So können als Arbeitsanweisungen auch festgelegte Fahrspuren bzw. Routen definiert sein, d.h. es können festgelegte Routen auf der landwirtschaftlichen Fläche definiert sein, entlang derer das Trägerfahrzeug jeweils bewegt wird, bzw. bewegt werden soll.

So können bspw. die Arbeitsanweisungen bei Kurvenfahrten definieren, mit welcher Fahrgeschwindigkeit das Trägerfahrzeug bewegt werden soll und mit welchem Lenkwinkel bzw. Kurvenradius das Trägerfahrzeug hierbei bewegt werden soll. Die Arbeitsanweisungen sind hierfür in der Steuereinrichtung hinterlegt bzw. kann in der Steuereinrichtung auch ein entsprechendes Regelungsprogramm hinterlegt sein. Anhand der aktuellen, durch das Positionsbestimmungssystem erfassten Istposition sowie der in der Steuereirichtung hinterlegten Routen werden anschließend insbesondere die Antriebseinheit bzw. der Antriebsstrang und die Komponenten der Lenkung des Trägerfahrzeugs angesteuert bzw. geregelt. Somit werden jeweils auf Basis der aktuell durch das Positionsbestimmungssystem ermittelten Istposition und der definierten Routen mittels der Steuereinrichtung die Bewegungen des Trägerfahrzeugs geregelt und/oder gesteuert.

Die Routen und die daraus resultierenden Arbeitsanweisungen können bspw. durch eine Bedienperson in der Steuereinrichtung hinterlegt bzw. in dieser eingegeben werden. Auch können die Arbeitsanweisungen mittels eines Simulationssystems definiert werden. Die somit im Simulationssystem definierten Routen und die daraus resultierenden Arbeitsanweisungen können anschließend wiederum in die Steuereinrichtung hinterlegt werden, bzw. kann das Simulationssystem mit der Steuereinrichtung verbindbar sein. Im Simulationssystem kann zudem ein Regelalgorithmus hinterlegt sein, welcher die durch eine Bedienperson festgelegten Positionen in für das Positionsbestimmungssystem zu verarbeitende Positionen und/oder Koordinaten umwandelt. Somit muss die Bedienperson keine Koordinaten definieren, sondern es reicht lediglich die Vorgabe des Verfahrweg. Das Simulationssystem kann zudem Vorschläge über optimierte Routen und/oder Arbeitsanweisungen ausgeben bzw. errechnen welche anschließend wiederum durch eine Bedienperson entsprechend festgelegt werden können. Das Simulationssystem kann zudem 3D-Daten umfassen, welche die jeweils reale Umgebung der Ackerfläche ausgeben bzw. beinhalten können, so dass eine optimierte Planung ermöglicht wird.

Mittels des Trägerfahrzeugs bzw. mittels der Steuereinrichtung erfolgt somit eine Implementierung der durch das Simulationssystem definierten bzw. vorgegebenen insbesondere aus den Routen resultierenden Arbeitsanweisungen.

Darüber hinaus können an dem zumindest einem Arbeitsgerät verschiedenste Aktoren angebracht sein. Wie bspw. elektrische und/oder hydraulische und/oder pneumatische Stellelemente, Motoren, Ventile oder dergl., welche ebenso mittels der Steuereinrichtung angesteuert und/oder geregelt werden können. Die Aktoren dienen insbesondere zum steuern der am zumindest einem Arbeitsgerät vorhandenen Arbeitswerkzeuge. So können an dem zumindest einem Arbeitsgerät verschiedenste Aktoren zur bspw. Verteilung von landwirtschaftlichen Verteilgut und/oder zur Tiefenverstellung von Saat- und/oder Bodenbearbeitungswerkzeugen oder dergl. angebracht sein. Auch für diese Aktoren können wiederum Positionsabhängige Arbeitsanweisungen in der Steuereinrichtung hinterlegt sein, so dass bspw. in Abhängigkeit der aktuellen Istposition eine Ausbringmenge erhöht, verringert oder unterbrochen wird, oder eine Arbeitstiefe erhöht oder verringert wird.

Um mittels des autonomen Trägerfahrzeug bzw. mittels des zumindest einem an diesem montierten Arbeitsgerät eine möglichst große Schlagkraft zu erreichen, kann zudem vorgesehen sein, dass jeweils links und rechts zum Trägerfahrzeug, sich in einer Arbeitsposition in großer Arbeitsbreite erstreckende Seitenteile bzw. Träger angeordnet sind. An diesen Seitenteilen bzw. an den Trägern der Seitenteile können zudem eine Mehrzahl von mittels Aktoren ansteuerbare und/oder regelbare Arbeitswerkzeuge zugeordnet sein.

Zudem kann vorgesehen sein, dass die Träger für eine Transportfahrt um Schwenkachsen jeweils in Richtung des Trägerfahrzeug derartig verschwenkt werden können, dass mittels des Trägerfahrzeug bzw. mittels des zumindest einem Arbeitsgerät eine für eine Straßenfahrt zulässige Transportbreite erreicht wird, bzw. nicht überschritten wird.

Um eine große Schlagkraft mittels des zumindest einem Arbeitsgerät zu erreichen, können diese mitunter große Arbeitsbreiten von 6 Meter oder 9 Meter oder 12 Meter oder mehr aufweisen. Um jedoch trotzdem die länderspezifischen Verkehrsvorschriften für einen Straßentransport wie Transportbreite und Transporthöhe einzuhalten, werden diese bzw. die Träger bzw. die Seitenteile dieser jeweils in Bezug auf ein Mittelteil und/oder in Bezug auf das Trägerfahrzeug entsprechend verschwenkt um somit bspw. ein in Deutschland erforderliche maximale Transportbreite von drei Meter und die erforderliche maximale Transporthöhe von vier Meter einzuhalten. Wobei insbesondere die Arbeitsgeräte hierfür in bspw. zwei, drei oder mehr einzelne Maschinenabschnitte unterteilt sein können, welchen Maschinenabschnitten jeweils Träger und entsprechende mittels Aktoren betätigte Arbeitswerkzeuge bzw. Arbeits- und/oder Verteilelemente zugeordnet sein können.

In einer Ausführungsvariante könnte das zumindest eine Arbeitsgerät eine Verteilmaschine zur Ausbringung von Flüssigen und/oder Festen Verteilgütern wie bspw. Saatgut, Dünger oder dergl. sein. Wobei dem Arbeitsgerät zum Mitführen und Bereitstellen des Verteilguts ein Vorratsbehälter zugeordnet sein kann, welcher Vorratsbehälter zudem mit der Montagevorrichtung verbunden sein kann. Ebenso kann es sich beim Arbeitsgerät um eine Maschine zur Bodenbearbeitung handeln, wobei diese in diesem Fall keinen Vorratsbehälter aufweisen kann. Auch eine Kombination aus einer Bodenbearbeitungsmaschine und einer Verteilmaschine wären denkbar. Darüber hinaus könnten auch diverse andere landwirtschaftliche Arbeitsgeräte wie bspw. Heuwender, Schwader, Mähgeräte oder dergl. als Arbeitsgerät dienen.

Die Maschine weist insbesondere ein Mittelteil auf, welches Mittelteil vorzugsweise mittels der Montagevorrichtung mit dem autonomen landwirtschaftlichen Trägerfahrzeug verbunden sein kann. Insofern das zumindest eine Arbeitsgerät eine Verteilmaschine ist, kann dieses zudem einen Vorratsbehälter aufweisen. Wobei in einer derartigen Ausführungsvariante auch der Vorratsbehälter mittels der Montagevorrichtung mit dem autonomen mobilen Trägerfahrzeug verbunden sein kann und wobei das Mittelteil in diesem Fall auch am Vorratsbehälter angebracht sein kann. Auch können sowohl das Mittelteil als auch der Vorratsbehälter mittels separater und/oder gemeinsamer Montagevorrichtungen mit dem autonomen Trägerfahrzeug verbunden sein.

Um horizontale und/oder aufrechte Achsen schwenkbar zum Mittelteil können jeweils links und rechts ein Seitenteil angeordnet sein. Wobei die Seitenteile wiederum Träger aufweisen können, welchen Träger Arbeitswerkzeuge bzw. Arbeitselemente und/oder Ausbringelemente zugeordnet sein können. Auch können dem Mittelteil derartige Arbeitselemente und/oder Ausbringelemente zugeordnet sein. Wobei sich wiederum die Seitenteile aus mehreren Segmenten zusammen setzen können, welche um horizontale und/oder aufrechte Achsen zueinander verschwenkt werden können.

Um derartige Arbeitsgeräte in eine Transportposition überführen zu können, werden die Seitenteile bzw. deren Segmente vorzugsweise um aufrechte Achsen zueinander verschwenkt und anschließend wiederum um aufrechte Achsen in Bezug auf das Mittelteil verschwenkt.

Auch wäre eine Ausführungsvariante denkbar in der zunächst das Mittelteil und die Seitenteile über quer zur Fahrrichtung orientierte Achsen um ca. 90°bzw. um annähernd 90° nach oben verschwenkt werden und die Seitenteile anschließend in Bezug auf das Mittelteil um nun aufrecht verlaufende Achsen nach vorne und/oder nach hinten, in eine zumindest weitgehend parallele Stellung zur Fahrtrichtung, verschwenkt werden.

Auch wäre eine Klappung denkbar, in der die Seitenteile im Bezug zum Mittelteil jeweils um in Fahrtrichtung bzw. um horizontal verlaufende Achsen zueinander verschwenkt werden, wobei die Seitenteile hierbei bspw. um ca. 90° oder 180° zum Mittelteil verschwenkt werden können.

Auch Teleskopische Schiebeelemente und/oder Schieberahmen wären denkbar.

Auch könnte vorgesehen sein, dass die sich aus mehreren Segmenten zusammengesetzten Seitenteile wiederum zunächst um in Fahrtrichtung bzw. um horizontal verlaufende Achsen bspw. um 180° zueinander verschwenkt werden, sowie dass diese sich somit übereinander und/oder hintereinander befindenden Seitenteile zudem um in Fahrtrichtung bzw. um horizontal verlaufende Achsen ca. 90° in Bezug auf das Trägerfahrzeug nach oben verschwenkt werden.

Auch eine Kombination der vorab genannten Klapp- und Schwenkkinematiken bzw. Teleskopkinematiken wären denkbar.

Unabhängig von der Art der Klappung werden die Seitenteile bzw. deren Träger jeweils in Richtung des autonomen Trägerfahrzeugs verschwenkt, so dass das zumindest eine Arbeitsgerät für eine Transportfahrt nicht vom Trägerfahrzeug entkoppelt bzw. gelöst werden muss.

Um Unabhängig von der Art des zumindest einen Arbeitsgerätes mittels des autonomen landwirtschaftlichen Trägerfahrzeug zum einen eine möglichst gleichmäßige Gewichtsverteilung auf die Räder und/oder die Raupenfahrwerke zu erreichen, zudem aber auch an den Rädern und/oder Raupenfahrwerken welche die jeweilige Zugkraft auf die Bodenoberfläche übertragen müssen, genügend Ballastierung zu erzeugen und darüber hinaus während der Überführung aus einer Arbeits- in eine Transportposition keine negativen Stützlasten hervorzurufen ist in einer Weiterbildung vorgesehen, dass die Antriebseinheit insbesondere gegenüberliegend zum zumindest einem Arbeitsgerät angeordnet ist, wobei die Antriebseinheit hierbei in Fahrtrichtung betrachtet insbesondere einem vorderen Bereich des Trägerfahrzeug zugeordnet ist. Wobei die Antriebseinheit zudem mit einer Rahmenkonstruktion verbunden ist. Nachfolgend an die Antriebseinheit können, ebenfalls der Rahmenkonstruktion zugeordnet die Montagevorrichtungen folgen. Des Weiteren können die Räder und/oder Raupenfahrwerke seitlich zu den Montagvorrichtungen und/oder zur Antriebseinheit angeordnet sein.

Insbesondere kann vorgesehen sein, dass die Arbeitsgeräte am Trägerfahrzeug mittels der Montagevorrichtungen derartig angeordnet sind, dass der Schwerpunkt des Trägerfahrzeug FS bzw. die Stützlast des Trägerfahrzeug, welche durch die Gewichtskraft des Trägerfahrzeug FGT und die Gewichtskraft des Arbeitsgerätes FGA hervorgerufen wird, in Fahrtrichtung zwischen den zumindest zwei hintereinander angeordneten Rädern und/oder Raupenfahrwerken liegt und/oder dass dieser sich vor der hinteren Umlenkrolle des Raupenfahrwerk befindet.

Dies wird insbesondere dadurch erreicht, dass die Antriebseinheit sich im vorderen Bereich der Rahmenkonstruktion befindet und die Montagevorrichtungen hinter der Antriebseinheit. Zudem kann dies durch verschiedene Positionen von Montagevorrichtungen an der Rahmenkonstruktion noch weiter verbessert werden. Der Schwerpunkt kann sich zwar in Abhängigkeit ob das Arbeitsgerät sich in Arbeitsposition oder in Transportposition befindet zwischen den Rädern und/oder den Umlenkrollen verschieben, liegt jedoch dennoch immer dazwischen, bzw. liegt dieser immer vor dem hintersten Rad und/oder der hintersten Umlenkrolle des Raupenfahrwerk.

Der Schwerpunkt des Trägerfahrzeugs ist unabhängig von der Art des Arbeitsgerätes jeweils derartig definiert, dass ein Moment welches auf ein hinteres Rad und/oder die hintere Umlenkrolle des Raupenfahrwerk wirkt in Richtung des Trägerfahrzeug stets größer oder gleich ist als in Richtung des, hinter diesem Rad und/oder die hintere Umlenkrolle angeordneten Arbeitsgeräts. Wobei dies zudem unabhängig von der jeweiligen Klappposition des Arbeitsgerätes ist. Um dies zu verbessern bzw. zu gewährleisten, können die Montagevorrichtungen an verschiedenen Positionen der Rahmenkonstruktion angebracht sein.

Mathematisch bedeutet dies:

$$FS \times lS \geq FGT \times lGT + FGA \times lGA$$

Wobei

LS der Hebel zwischen Schwerpunkt und dem hinterstem Rad und/oder der hintersten Umlenkrolle des Raupenfahrwerk ist,

LGT der Hebel zwischen Schwerpunkt bzw. Angriffspunkt der Gewichtskraft des Trägerfahrzeugs und dem hinterstem Rad und/oder der hintersten Umlenkrolle des Raupenfahrwerk ist,

LGA der Hebel zwischen Schwerpunkt bzw. Angriffspunkt der Gewichtskraft des zumindest einem Arbeitsgerät und dem hinterstem Rad und/oder der hintersten Umlenkrolle des Raupenfahrwerk ist.

Es sei hierbei noch angemerkt das sich die Bezeichnung hinterstes Rad und/oder hinterste Umlenkrolle jeweils auf das dem Arbeitsgerät vorgeordneten Rad und/oder Umlenkrolle bezieht.

Eine Ausführungsvariante des autonomen landwirtschaftlichen Trägerfahrzeugs kann bspw. vorsehen, dass in einer Transportposition in einem vorderen Bereich zunächst die Antriebseinheit vorgesehen ist. Mittels einer Rahmenkonstruktion schließen an die Antriebseinheit Montagevorrichtungen derartig an, dass an diesem das zumindest eine landwirtschaftliche Arbeitsgerät angebaut wird. Insofern dieses einen Vorratsbehälter und/oder einen Transportbehälter aufweist, ist dieser nachfolgend an die Antriebseinheit am Trägerfahrzeug angeordnet. Seitlich neben der Antriebseinheit und/oder neben dem Vorratsbehälter und/oder Transportbehälter sind Räder und/oder Raupenfahrwerke angebracht. Die Seitenteile bzw. die Träger, an denen die jeweiligen Arbeitswerkzeuge bzw. die Arbeits- und/oder Ausbringelemente angebracht sind, werden zudem in einer derartigen Ausführungsvariante bei der Überführung in eine Transportposition insbesondere derartig verschwenkt, dass diese sich seitlich zur Antriebseinheit und/oder zum Vorratsbehälter und/oder zum Transportbehälter erstrecken. Zudem werden die Träger und/oder Seitenteile derartig verschwenkt, dass diese sich in einer Transportposition oberhalb zumindest einzelner Räder und/oder der Raupenfahrwerke befinden oder zumindest abschnittweise oberhalb einzelner Räder und/oder Raupenfahrwerke.

Das autonome landwirtschaftliche Trägerfahrzeug kann einen ersten Betriebsmodus vorsehen, bei welchem die Arbeitsanweisungen jeweils auf Basis der durch das Positionsbestimmungssystem ermittelten Istposition mittels der Steuereinrichtung angesteuert und/oder geregelt werden.

Darüber hinaus kann das autonome landwirtschaftliche Trägerfahrzeug einen zweiten Betriebsmodus vorsehen, wobei mittels der Steuereinrichtung eine Übersteuerung des ersten Betriebsmodus erfolgen kann. Und wobei der zweite Betriebsmodus insbesondere auf Basis der durch die Umfeldsensorik erfassten Hindernisse und/oder Elemente erfolgt. Auch kann der zweite Betriebsmodus durch mittels Sensoren oder Messmittel erfasste Fehlfunktionen der Aktoren und/oder der Fahrgeschwindigkeit und/oder der Lenkung definiert werden.

Des Weiteren kann ein dritter Betriebsmodus vorgesehen sein, wobei mittels der Steuereinrichtung eine Übersteuerung des ersten Betriebsmodus und des zweiten Betriebsmodus erfolgen kann. Und wobei der dritte Betriebsmodus insbesondere auf Basis durch mittels einer Bedienperson vorgegebener Arbeitsanweisungen erfolgt. So kann der dritte Betriebsmodus bspw. eine Koppelung mit einem Eingabegerät umfassen mittels welchem Eingabegerät die Aktoren und/oder die Elemente des Trägerfahrzeug manuell betätigt werden können, insbesondere unabhängig vom ersten oder zweiten Betriebsmodus, insbesondere unabhängig von der durch die Umfeldsensorik ermittelten Hindernisse und/oder Elemente.

Die manuelle Bediendung im dritten Betriebsmodus kann unabhängig von der durch die Umfeldsensorik ermittelten Hindernisse und/oder Elemente erfolgen, wobei jedoch dennoch vorgesehen sein kann, dass das Eingabegerät bei einem ermittelten Hindernis und/oder Element eine Warnsignal oder einen Hinweis am Eingabegerät ausgibt, bzw. eine zusätzliche Freigabe durch eine Bedienperson erforderlich ist.

Das Eingabegerät kann bspw. eine am Trägerfahrzeug angebrachte bzw. vorhandene Bedienkonsole sein. Auch kann das Eingabegerät ein Bedientableau sein, welches am Trägerfahrzeug angebracht sein kann, aber auch als Fernbedienung ausgeführt sein kann. Des Weiteren kann das Eingabegerät ein elektronisches Handgerät sein. Das Eingabegerät kann darüber hinaus sowohl zur Eingabe von Sollwertvorgaben bzw. zur Steuerung als auch zur Ausgabe bzw. zur Anzeige von Informationen des Trägerfahrzeug und/oder des Arbeitsgerätes dienen. Auch eine Funkfernsteuerung wäre denkbar. Das Eingabegerät kann aber auch ein mobiles Endgerät, wie bspw. ein Tablet sein. Das Eingabegerät kann mittels einer Drahtverbindung mit der Steuereinrichtung verbunden sein, es wäre aber auch eine drahtlose Verbindung, bspw. mittels WLAN oder Bluetooth oder dergl. denkbar.

Um auch eine drahtlose Verbindung sicher zu gestalten wäre es zudem denkbar, dass die Kommunikation zwischen der Steuereinrichtung und dem Eingabegerät über zwei parallele Kanäle erfolgt, so dass eine Redundanz sichergestellt ist.

Ebenso kann vorgesehen sein, dass bei einer unterbrochenen und/oder fehlerhaften Kommunikation zwischen der Steuereinrichtung und dem Positionsbestimmungssystem oder zwischen der Steuereinrichtung und dem Eingabegerät oder innerhalb der Steuereinrichtung des Trägerfahrzeug und/oder des zumindest einem Arbeitsgerät das Trägerfahrzeug und/oder das Arbeitsgerät in einen sicheren insbesondere Betriebssicheren Zustand überführt wird.

Der sichere bzw. der Betriebssichere Zustand beinhaltet bspw. ein Stillsetzten des Fahrantriebs oder eine Beendigung des Verteilvorgangs bei einem als Verteilmaschine ausgeführten Arbeitsgerät. Auch andere Funktionen können entsprechend mit angesteuert werden. Wobei dies jeweils mittels der Steuereinrichtung erfolgt.

Am Eingabegerät kann darüber hinaus ein NOT-Aus Schalter bzw. ein NOT-Aus Element vorgesehen sein, welche NOT-Aus insbesondere den dritten Betriebsmodus bilden kann. So kann nach Betätigung des NOT-Aus mittels des dritten Betriebsmodus auch vorgesehen sein, dass das Trägerfahrzeug in einen sicheren Zustand überführt wird, d.h. das bspw. der Fahrantrieb stillgesetzt wird. Auch kann vorgesehen sein, dass bspw. die Verteilung von Verteilgütern abgeschaltet wird. Auch andere Funktionen können entsprechend mit angesteuert werden. Wobei dies jeweils mittels der Steuereinrichtung erfolgt.

Darüber hinaus kann der NOT-Aus derartig definiert sein, dass ein Betrieb des Trägerfahrzeugs erst nach Quittierung dieses und/oder nach Freigabe durch eine Bedienperson möglich ist.

In einer Weiterbildung kann vorgesehen sein, dass ein Wechsel aus dem dritten in den zweiten Betriebsmodus bzw. aus dem zweiten in den ersten Betriebsmodus bzw. aus dem dritten in den ersten Betriebsmodus nur mittels einer Freigabe durch eine Bedienperson erfolgen kann, wobei diese Freigabe bspw. mittels des Eingabegerät erfolgen kann. Darüber hinaus kann vorgesehen sein, dass in der Steuereinrichtung entsprechende Freigabeparameter hinterlegt sind, auf Basis derer jeweils die Betriebsmodi ansteuerbar bzw. betätigbar sind. Als Freigabeparameter kann bspw. eine Quittierung des NOT-Aus dienen. Auch kann als Freigabeparameter bspw. dienen ob die Umfeldsensorik Hindernisse und/oder Elemente erfasst.

Darüber hinaus könnte vorgesehen sein, dass als Umfeldsensorik zwei identische Messsysteme verwendet werden mittels derer jeweils die gleichen Umfeldeigenschaften erfasst werden. Wobei auch hierbei wiederum vorgesehen sein kann, dass bei einer definierten Abweichung der mittels dieser Messsysteme erfassten Umfeldeigenschaften das Trägerfahrzeug und/oder das zumindest eine Arbeitsgerät in einen sicheren Zustand überführt wird.

Auch können in der Steuereinrichtung für verschiedene Umfeldsensoren und/oder Sensoren des Arbeitsgerätes Prioritäten hinterlegt sein, so dass bspw. auf Basis der erfassten Hindernisse und/oder Elemente oder auf Basis der erfassten Fehlfunktion des Trägerfahrzeug und/oder des Arbeitsgerätes das Trägerfahrzeug und/oder das Arbeitsgerät in einen sicheren Zustand überführt wird oder das Trägerfahrzeug und/oder das Arbeitsgerät noch weiter betrieben wird. Hierbei könnte bspw. auch eine Anpassung der Arbeitsanweisungen vorgesehen sein, so dass bspw. in Abhängigkeit der erfassten Fehlfunktion das Trägerfahrzeug bspw. mit reduzierter Geschwindigkeit weiter betrieben wird.

Die Übergänge zwischen den Betriebsmodi können normalerweise innerhalb einer Bandbreite eines Übergangsbereichs stattfinden, insbesondere sind die Grenzen zwischen den Betriebsmodi fließend zu sehen, so dass die Übergänge vorzugsweise mit nicht exakt eingegrenzter Grenze zwischen den Betriebsmodi stattfinden müssen. Wobei bei bspw. der Betätigung des NOT-Aus dieser Übergang nicht fließend sondern annähernd schlagartig erfolgen kann.

Auch können die Übergänge zwischen den Arbeitsanweisungen normalerweise innerhalb einer Bandbreite eines Übergangsbereichs stattfinden, insbesondere sind die Grenzen zwischen den Arbeitsanweisungen fließend zu sehen, so dass die Übergänge vorzugsweise mit nicht exakt eingegrenzter Grenze zwischen den Arbeitsanweisungen stattfinden müssen. So kann auch vorgesehen sein, dass auf Basis des Positionsbestimmungssystem bzw. der in der Steuereinrichtung hinterlegten Routen bspw. die künftig definierte Fahrgeschwindigkeit und/oder der künftig erforderliche Lenkwinkel hinterlegt ist, und bspw. eine Beschleunigung oder Verzögerung bereits in einer vorhergehenden Arbeitsanweisung derartig erfolgt, dass bei Erreichung der Sollposition für eine weitere Arbeitsanweisung bereits die Sollfahrgeschwindigkeit erreicht ist, wodurch wiederum insbesondere kontinuierliche Übergänge zwischen den Arbeitsanweisungen erreicht werden. Ebenso kann mit den Aktoren und den übrigen Stellelementen verfahren werden.

In einer Weiterbildung kann dem Trägerfahrzeug bzw. der Rahmenkonstruktion eine Anhängevorrichtung zugeordnet sein, bzw. zugeordnet werden, so dass mittels der Anhängevorrichtung das Trägerfahrzeug mittels eines Zugfahrzeuges jeweils transportiert werden kann.

Es sei noch darauf hingewiesen, dass alle vorab mit in Bezug auf die Fahrtrichtung vorne definierten Merkmale gleichermaßen auch umgekehrt sein könnten, so dass bspw. die Antriebseinheit in Fahrrichtung hinten sich befindet.

Wenn zuvor das Erfindungsgemäße autonome landwirtschaftliche Trägerfahrzeug beschrieben wurde, so sei an dieser Stelle ausdrücklich betont, dass alle Aspekte und Ausführungsvarianten, die im Zusammenhang mit dem Trägerfahrzeug erläutert wurden, gleichermaßen Teilaspekte des nachfolgenden erfindungsgemäßen Verfahren betreffen oder sein können. Wenn daher an einer Stelle bei der Beschreibung oder auch bei den Anspruchsdefinitionen vom erfindungsgemäßen Trägerfahrzeug die Rede ist, so gilt dies gleichermaßen für das erfindungsgemäße Verfahren. In umgekehrter Weise gilt dasselbe, so dass auch alle Aspekte die im Zusammenhang mit dem erfindungsgemäßen Verfahren erläutert werden, gleichermaßen Teilaspekte des Trägerfahrzeugs sein können.

Zur Lösung der Aufgaben schlägt die Erfindung zudem ein Verfahren zur Steuerung und/oder Regelung eines autonomen landwirtschaftlichen Trägerfahrzeugs vor.

Das autonome Trägerfahrzeug umfasst eine Rahmenkonstruktion, und ein an der Rahmenkonstruktion angebrachtes Fahrwerk, wobei das Fahrwerk zumindest zwei lenkbare Räder und/oder Raupenfahrwerke aufweist, und wobei der Rahmenkonstruktion zumindest eine Montagevorrichtung zur Verbindung mit zumindest einem landwirtschaftlichen Arbeitsgerät zugeordnet ist. Das erfindungsgemäße Verfahren umfasst zumindest die Verfahrensschritte:

- Ermittlung von im Umfeld des Trägerfahrzeug vorhandener Hindernissen und/oder Elementen,
- Steuern des Trägerfahrzeug und/oder des zumindest einen Arbeitsgerät mittels einer Steuereinrichtung, wobei die Steuereinrichtung mit einem, eine Position erfassenden und/oder ausgebenden Positionsbestimmungssystem verbindbar ist und wobei in der Steuereinrichtung vorzugsweise positionsabhängige Arbeitsanweisungen für das Trägerfahrzeug hinterlegt sind.

Die erfindungsgemäßen Verfahrensschritte können hierbei insbesondere kontinuierlich durchgeführt werden.

Das Verfahren kann einen ersten Betriebsmodus vorsehen, bei welchem die Arbeitsanweisungen jeweils auf Basis der durch das Positionsbestimmungssystem ermittelten Istposition mittels der Steuereinrichtung angesteuert und/oder geregelt werden.

Darüber hinaus kann das Verfahren einen zweiten Betriebsmodus vorsehen, wobei mittels der Steuereinrichtung eine Übersteuerung des ersten Betriebsmodus erfolgen kann. Und wobei der zweite Betriebsmodus insbesondere auf Basis der durch die Umfeldsensorik erfassten Hindernisse und/oder Elemente erfolgt. Auch kann der zweite Betriebsmodus durch mittels Sensoren oder Messmittel erfasste Fehlfunktionen der Aktoren und/oder der Fahrgeschwindigkeit und/oder der Lenkung definiert werden.

Des Weiteren kann ein dritter Betriebsmodus vorgesehen sein, wobei mittels der Steuereinrichtung eine Übersteuerung des ersten Betriebsmodus und des zweiten Betriebsmodus erfolgen kann. Und wobei der dritte Betriebsmodus insbesondere auf Basis durch mittels einer Bedienperson vorgegebener Arbeitsanweisungen erfolgt. So kann der dritte Betriebsmodus bspw. eine Koppelung mit einem Eingabegerät umfassen mittels welchem Eingabegerät die Aktoren und/oder die Elemente des Trägerfahrzeug manuell betätigt werden können, insbesondere unabhängig vom ersten oder zweiten Betriebsmodus, insbesondere unabhängig von der durch die Umfeldsensorik ermittelten Hindernisse und/oder Elemente.

Die manuelle Bediendung im dritten Betriebsmodus kann unabhängig von der durch die Umfeldsensorik ermittelten Hindernisse und/oder Elemente erfolgen, wobei jedoch dennoch vorgesehen sein kann, dass das Eingabegerät bei einem ermittelten Hindernis und/oder Element eine Warnsignal oder einen Hinweis am Eingabegerät ausgibt, bzw. eine zusätzliche Freigabe durch eine Bedienperson erforderlich ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:

Figur 1A      eine Perspektivansicht eines autonomen landwirtschaftlichen Trägerfahrzeug mit vier Rädern.

Figur 1B      eine Seitenansicht eines autonomen landwirtschaftlichen Trägerfahrzeug gemäß der Figur 1A.

Figur 1C      eine Draufsicht eines autonomen landwirtschaftlichen Trägerfahrzeug gemäß der Figuren 1A und 1B.

Figur 1D      eine Vorderansicht eines autonomen landwirtschaftlichen Trägerfahrzeug gemäß der Figuren 1A bis 1C.

Figur 2A      eine Perspektivansicht eines autonomen landwirtschaftlichen Trägerfahrzeug mit zwei Raupenfahrwerken.

Figur 2B      eine Seitenansicht eines autonomen landwirtschaftlichen Trägerfahrzeug gemäß der Figur 2A.

Figur 2C      eine Draufsicht eines autonomen landwirtschaftlichen Trägerfahrzeug gemäß der Figuren 2A und 2B.

Figur 2D      eine Vorderansicht eines autonomen landwirtschaftlichen Trägerfahrzeug gemäß der Figuren 2A bis 2C.

Figur 3A      eine Seitenansicht eines autonomen landwirtschaftlichen Trägerfahrzeug gemäß Figur 1A mit einem Arbeitsgerät zur Aussaat in Transportstellung.

Figur 3B      eine Seitenansicht eines autonomen landwirtschaftlichen Trägerfahrzeug gemäß Figur 2A mit einem Arbeitsgerät zur Aussaat in Transportstellung.

Figur 3C      eine Seitenansicht eines autonomen landwirtschaftlichen Trägerfahrzeug gemäß der Figur 3A mit einem Arbeitsgerät zur Aussaat in Arbeitsstellung.

Figur 3D      eine Seitenansicht eines autonomen landwirtschaftlichen Trägerfahrzeug gemäß der Figur 3B mit einem Arbeitsgerät zur Aussaat in Arbeitsstellung.

Figur 3E      eine Draufsicht eines autonomen landwirtschaftlichen Trägerfahrzeug gemäß der Figur 3B mit einem Arbeitsgerät zur Aussaat in Arbeitsstellung.

Figur 4A      eine Seitenansicht eines autonomen landwirtschaftlichen Trägerfahrzeug gemäß Figur 1A mit einem Arbeitsgerät in Form einer Feldspritze in Transportstellung.

Figur 4B      eine Seitenansicht eines autonomen landwirtschaftlichen Trägerfahrzeug gemäß Figur 2A mit einem Arbeitsgerät in Form einer Feldspritze in Transportstellung.

Figur 4C      eine Seitenansicht eines autonomen landwirtschaftlichen Trägerfahrzeug gemäß der Figur 4A mit einem Arbeitsgerät in Form einer Feldspritze in Arbeitsstellung.

Figur 4D      eine Seitenansicht eines autonomen landwirtschaftlichen Trägerfahrzeug gemäß der Figur 4B mit einem Arbeitsgerät in Form einer Feldspritze in Arbeitsstellung.

Figur 5A      eine Seitenansicht eines autonomen landwirtschaftlichen Trägerfahrzeug gemäß Figur 1A mit einem Arbeitsgerät in Form eines Transportgerätes.

Figur 5B      eine Seitenansicht eines autonomen landwirtschaftlichen Trägerfahrzeug gemäß Figur 2A mit einem Arbeitsgerät in Form eines Transportgerätes.

Figur 6      ein schematisches Blockschaltbild der Steuereinrichtung und dessen Komponenten.

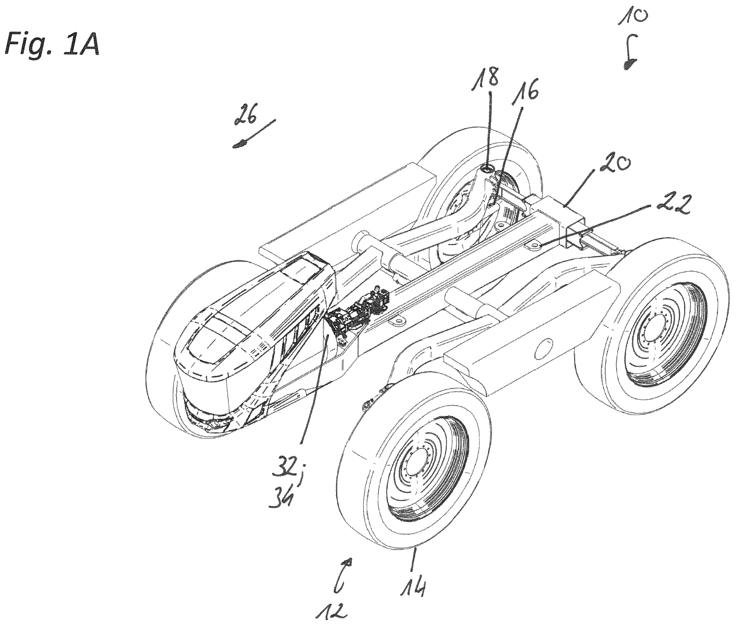

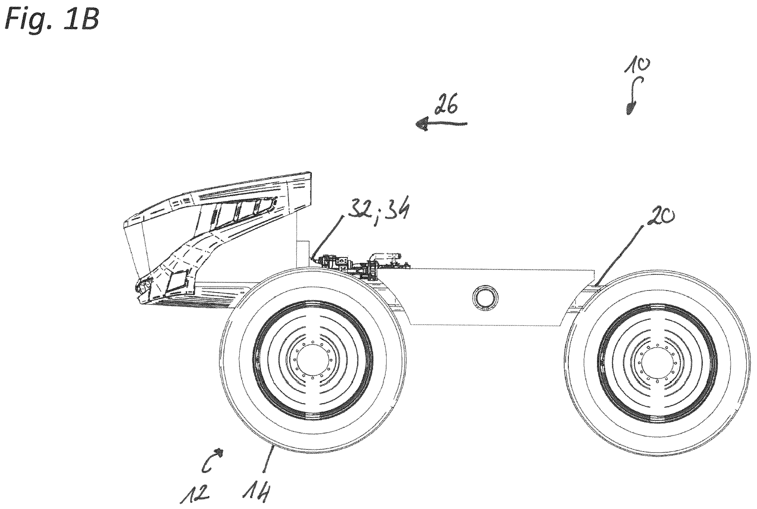

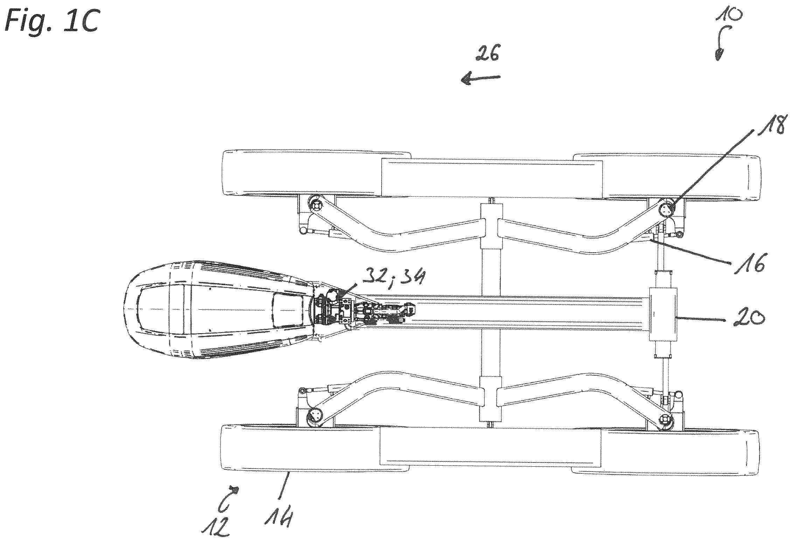

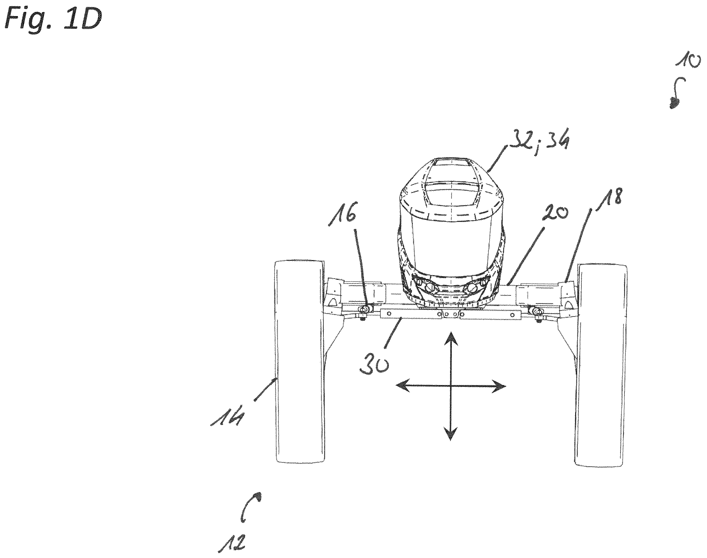

Die in den Figuren 1 bis 6 gezeigten Ausführungsformen stimmen zumindest teilweise überein, so dass ähnliche oder identische Teile mit den gleichen Bezugzeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie das erfindungsgemäße autonome landwirtschaftlichen Trägerfahrzeug und das erfindungsgemäße Verfahren ausgestaltet sein können und stellen keine abschließende Begrenzung dar.

Eine Ausführungsvariante eines autonomen landwirtschaftlichen Trägerfahrzeugs 10 geht aus den Figuren 1A bis 1D hervor. Wobei die Figur 1A dieses in einer Perspektivansicht, die Figur 1B dieses in einer Seitenansicht, die Figur 1C dieses in einer Draufsicht und die Figur 1D dieses in einer Vorderansicht zeigen. Zur Fortbewegung des Trägerfahrzeuges 10 ist diesem ein Fahrwerk 12 bestehend aus vier Rädern 14, welche über zwei Achsen verteilt sind zugeordnet.

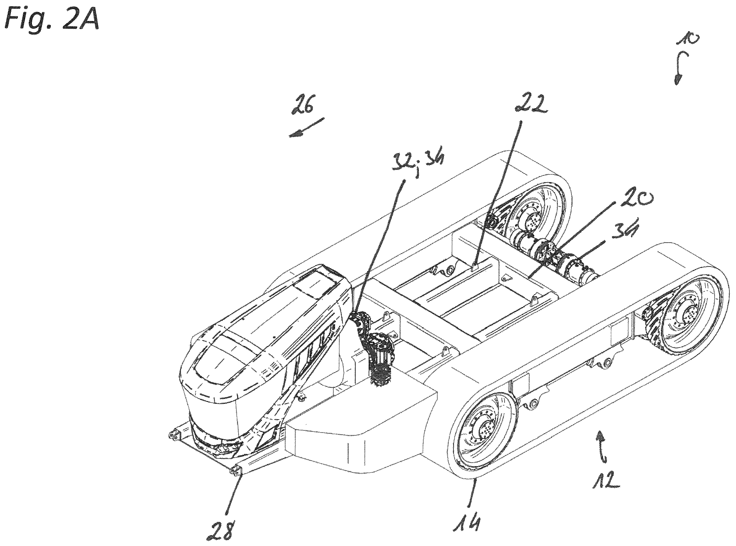

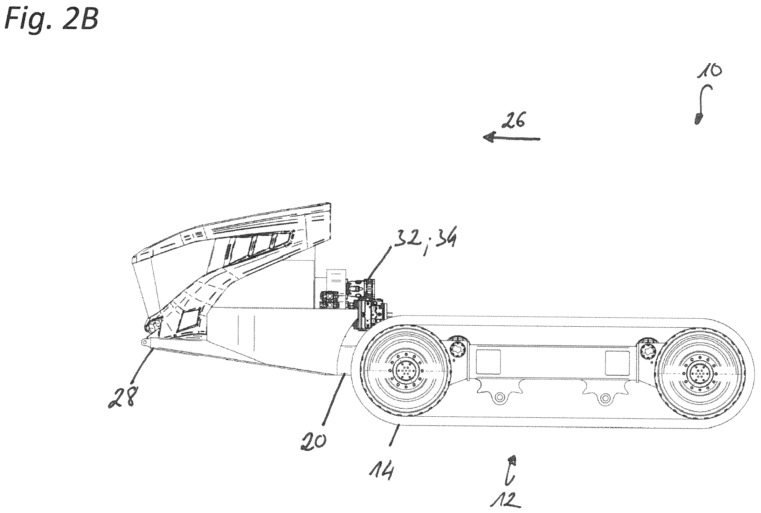

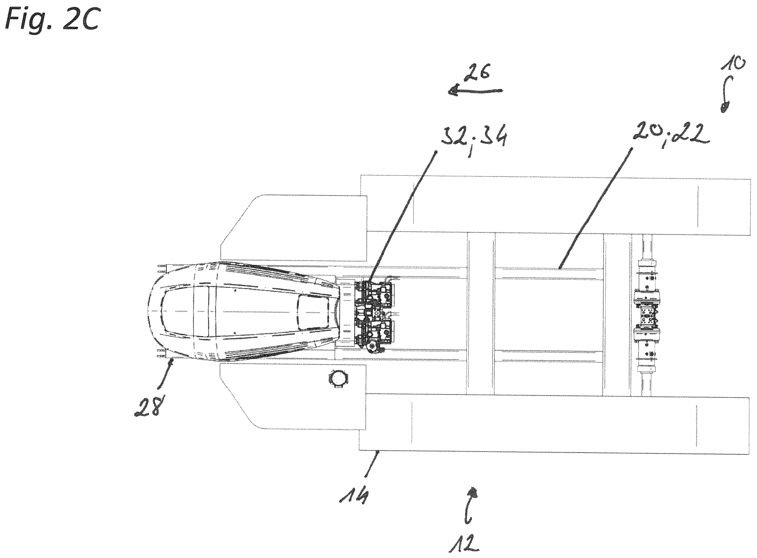

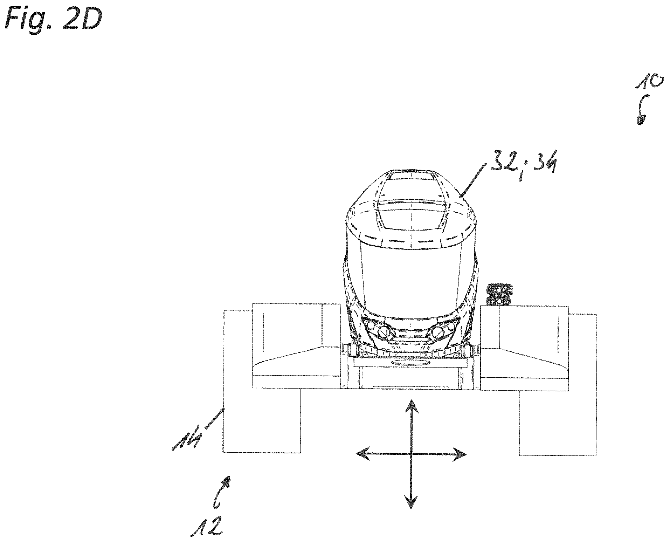

Eine Weitere Ausführungsvariante eines autonomen landwirtschaftlichen Trägerfahrzeugs 10 geht aus den Figuren 2A bist 2D hervor. Wobei die Figur 2A dieses in einer Perspektivansicht, die Figur 2B dieses in einer Seitenansicht, die Figur 2C dieses in einer Draufsicht und die Figur 2D dieses in einer Vorderansicht zeigen. Zur Fortbewegung des Trägerfahrzeuges 10 ist diesem als Fahrwerk 12, anders als im Ausführungsbeispiel der Figuren 1 nicht vier Räder 12, welche über zwei Achsen verteilt zugeordnet, sondern zwei gegenüberliegende Raupenfahrwerke 14 zugeordnet. Wobei es sich bei den hierbei gezeigten Raupenfahrwerken 14 um sog. Bandfahrwerke handelt, es wären jedoch auch andere Arten von Raupenfahrwerken denkbar, bspw. auch jegliche Art von sog. Gleisketten.

Gemäß der Figuren 1 und 2 besitzt das Fahrwerk 12 entweder Räder oder Raupenfahrwerke 14, es wäre jedoch auch eine Kombination aus Rädern und Raupenfahrwerken denkbar. Zudem können die Räder und/oder Raupenfahrwerke 12 lenkbar sein. Wobei dem Trägerfahrzeug 10 der Figuren 1 hierfür jeweils Lenkzylinder 16 zugordnet sind, mittels welchem die Räder jeweils um aufrechte Achsen 18 entsprechend verschwenkt bzw. gelenkt werden können. Eine derartige Ausführung wäre auch für das Trägerfahrzeug der Figuren 1 denkbar. Bei der Ausführung des Fahrwerk 12 mittels Raupenfahrwerken 14 wäre es jedoch auch denkbar diese mittels entsprechender Schaltgetriebe und/oder Überlagerungslenkgetriebe entsprechend zu lenken.

Das Fahrwerk 12 ist an einer Rahmenkonstruktion 20 angebracht. Wobei dieser Rahmenkonstruktion darüber hinaus Montagevorrichtungen 22 zugeordnet sind, mittels derer jeweils zumindest ein landwirtschaftliches Arbeitsgerät 24 mit dem Trägerfahrzeug 10 fest verbunden werden kann. An der Rahmenkonstruktion können hierbei insbesondere zwei oder mehr Montagevorrichtung 22 vorgesehen sein. Bei der Montagevorrichtung 22 kann es sich insbesondere um eine sog. 2-Punkt Aufnahme und/oder um eine 3-Punkt Aufnahme handeln. Somit kann erreicht werden, dass das zumindest eine Arbeitsgerät 24 zumindest in Fahrtrichtung 26 abschnittweise fest mit der Rahmenkonstruktion 20 verbunden ist. Dies hat gegenüber den aus dem Stand der Technik bekannten Zugfahrzeugen mit Anhängevorrichtung bspw. in Form eines Zugpendel den Vorteil, dass das zumindest eine Arbeitsgerät 24 und das autonome Trägerfahrzeug 10 eine feste Einheit bilden. Auch kann es sich bei der Montagevorrichtung 22 um einen Zweipunkt - Kraftheber und/oder DreipunktKraftheber und/oder doppelten Zweipunkt - Kraftheber handeln.

Der Rahmenkonstruktion 20 kann bzw. können darüber hinaus, insbesondere in dessen vorderen Bereich Anhängevorrichtungen 28 zugeordnet sein. Mittels dieser Anhängevorrichtung 28 kann das Trägerfahrzeug 10 bspw. mittels eines Zugfahrzeuges zwischen den jeweiligen Ackerflächen bzw. landwirtschaftlichen Nutzflächen transportiert werden.

Das Fahrwerk 12, bzw. dessen Räder und/oder Raupenfahrwerke 14 können höhenverstellbar zur Rahmenkonstruktion 20 angebracht sein, auch kann die Spurweite der Räder und/oder der Raupenfahrwerke verstellbar ausgeführt sein, siehe Figur 1D und 2D. Wobei dies bspw. mittels hydraulischer und/oder pneumatischer und/oder elektrischer Stellelemente, bspw. mittels Zylinder 30 erfolgen kann. Gemäß der Figur 1D sind dem Trägerfahrzeug 10 zur Verstellung der Spurweite entsprechende hydraulisch betriebene Zylinder 30 zugeordnet. Auch andere Linearantriebe und/oder Spindelantriebe oder dergl. wären denkbar.

Zumindest ein Teil der Räder und/oder der Raupenfahrwerke 14 des Fahrwerks 12 kann angetrieben sein. Insbesondere sind jedoch zumindest jeweils zwei Räder und/oder Raupenfahrwerke 14 angetrieben, wobei hierfür dem Trägerfahrzeug 10 zumindest eine Antriebseinheit 32 mit einem Antriebsstrang 34 zugeordnet ist. Mittels des Antriebstrangs 34 kann somit das Fahrwerk bzw. dessen Räder und/oder Raupenfahrwerke 14 mit verschiedenen Geschwindigkeiten betrieben werden. Als Antriebseinheit 32 kann bspw. ein Verbrennungsmotor eingesetzt werden. Der Antriebsstrang 34 kann neben der Antriebseinheit 32 noch hydraulische und/oder elektrische Antriebe umfassen mittels denen die jeweiligen Räder und/oder Raupenfahrwerke angetrieben werden können.

Der Antriebsstrang 34 kann somit insbesondere einen Hybridantrieb bilden. Denkbar wären jedoch auch rein elektrische und/oder hydraulische Antriebsstränge welche keinen Verbrennungsmotor benötigen.

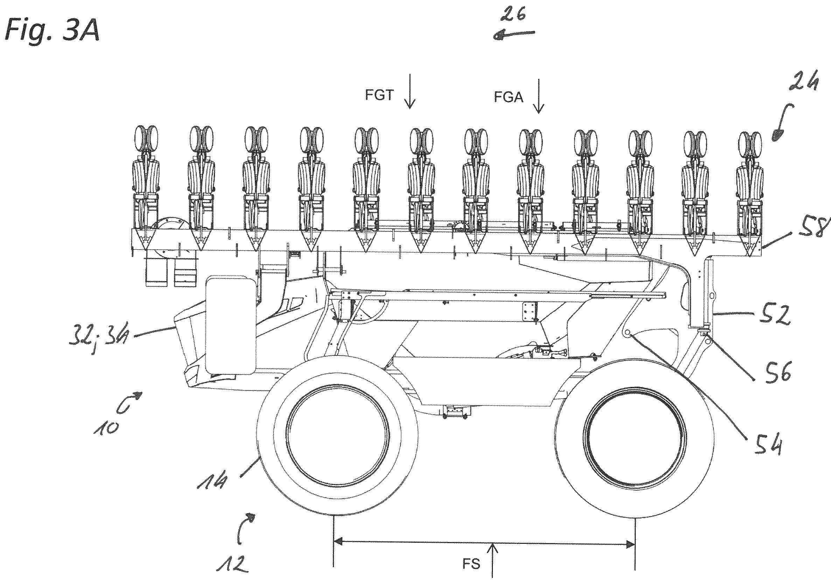

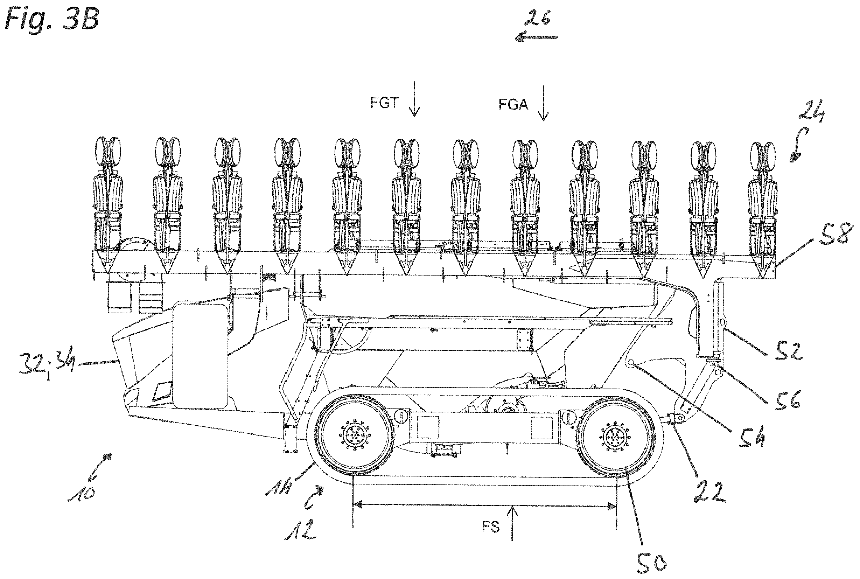

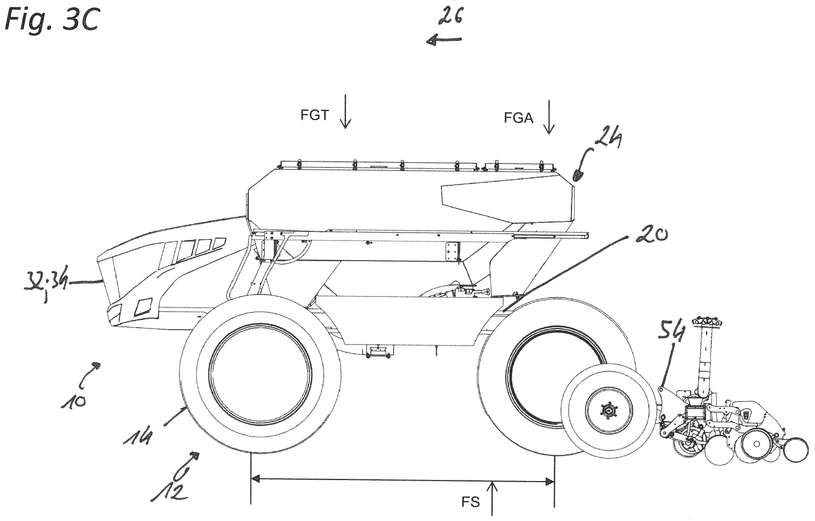

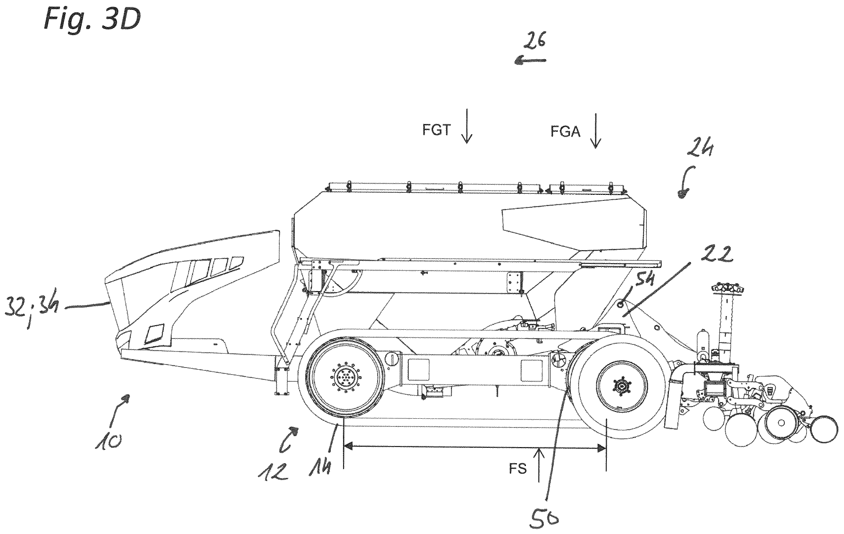

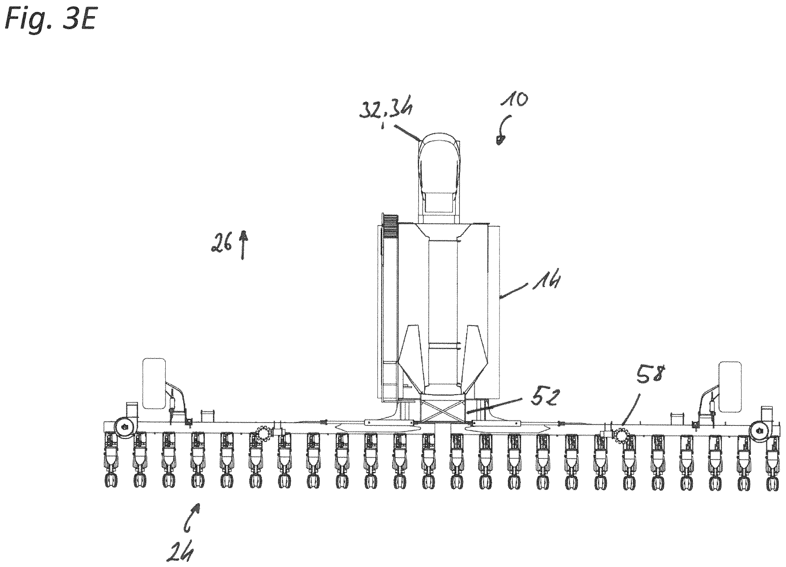

Verschiedene Ausführungsvarianten von autonomen landwirtschaftlichen Trägerfahrzeugen 10 mit jeweils zumindest einem Arbeitsgerät 24 gehen aus den Figuren 3 bis 5 hervor.

Wobei die Figur 3A hierbei eine Seitenansicht eines autonomen landwirtschaftlichen Trägerfahrzeugs 10 gemäß der Figur 1 zeigt, an welchem ein Arbeitsgerät 24 in Form einer Verteilmaschine zur Aussaat von landwirtschaftlichen Verteilgütern angebracht ist. Das Arbeitsgerät 24 befindet sich gemäß der Figur 3A in Transportstellung. Bei der hierbei gezeigten Verteilmaschine sind eine Vielzahl von zueinander beabstandeten Säeinheiten angebracht.

Die Figur 3B zeigt darüber hinaus eine Seitenansicht eines autonomen landwirtschaftlichen Trägerfahrzeugs 10 gemäß der Figur 2, an welchem ein Arbeitsgerät 24 in Form einer Verteilmaschine zur Aussaat von landwirtschaftlichen Verteilgütern angebracht ist. Das Arbeitsgerät 24 befindet sich gemäß der Figur 3B in Transportstellung. Bei der hierbei gezeigten Verteilmaschine sind eine Vielzahl von zueinander beabstandeten Säeinheiten angebracht.

Die Figur 3C zeigt eine Seitenansicht eines autonomen landwirtschaftlichen Trägerfahrzeugs 10 gemäß der Figur 1, an welchem ein Arbeitsgerät 24 in Form einer Verteilmaschine zur Aussaat von landwirtschaftlichen Verteilgütern angebracht ist. Das Arbeitsgerät 24 befindet sich gemäß der Figur 3C in Arbeitsstellung.

Die Figur 3D zeigt darüber hinaus eine Seitenansicht eines autonomen landwirtschaftlichen Trägerfahrzeugs 10 gemäß der Figur 2, an welchem ein Arbeitsgerät 24 in Form einer Verteilmaschine zur Aussaat von landwirtschaftlichen Verteilgütern angebracht ist. Das Arbeitsgerät 24 befindet sich gemäß der Figur 3D in Arbeitsstellung.

Die Figur 3E zeigt noch eine Draufsicht eines autonomen landwirtschaftlichen Trägerfahrzeugs 10 gemäß der Figur 2, an welchem ein Arbeitsgerät 24 in Form einer Verteilmaschine zur Aussaat von landwirtschaftlichen Verteilgütern angebracht ist. Das Arbeitsgerät 24 befindet sich gemäß der Figur 3E in Arbeitsstellung. Die Verteilmaschine umfasst zudem eine Mehrzahl von zueinander beabstandeten Säeinheiten.

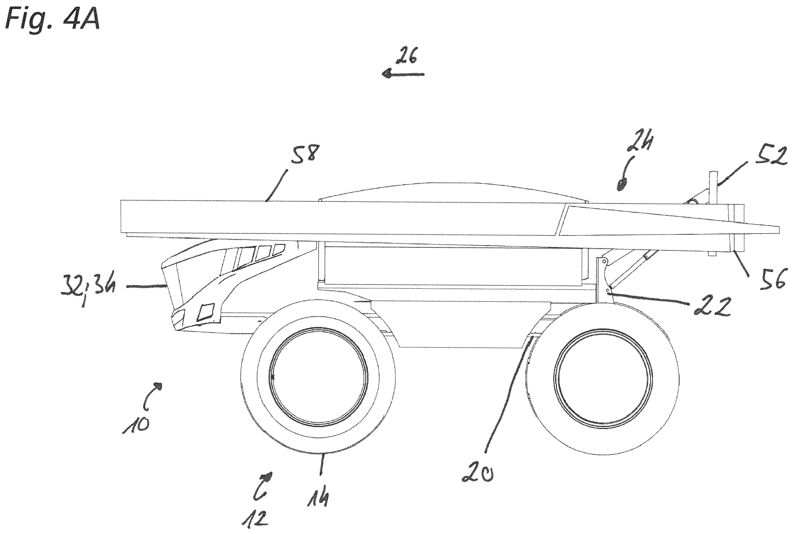

Die Figur 4A zeigt eine Seitenansicht eines autonomen landwirtschaftlichen Trägerfahrzeugs 10 gemäß der Figur 1, an welchem ein Arbeitsgerät 24 in Form einer Verteilmaschine bzw. einer Feldspritze zum Ausbringen von flüssigen und/oder festen Wirkstoffen von landwirtschaftlichen Verteilgütern angebracht ist. Das Arbeitsgerät 24 befindet sich gemäß der Figur 4A in Transportstellung.

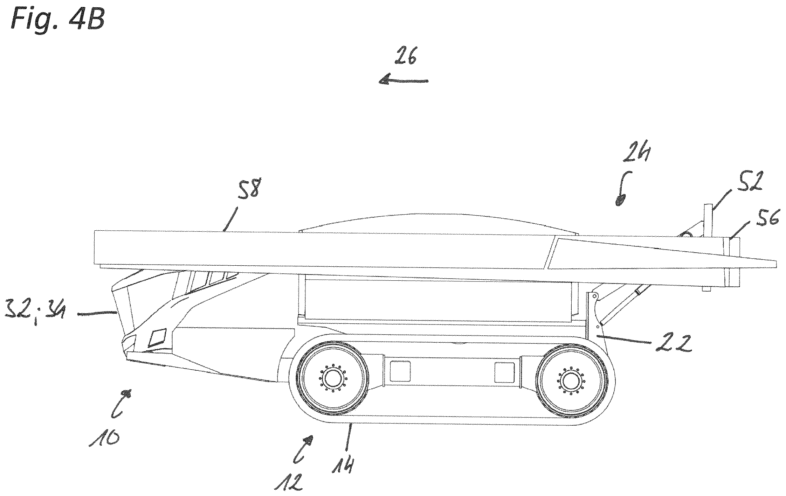

Die Figur 4B zeigt darüber hinaus eine Seitenansicht eines autonomen landwirtschaftlichen Trägerfahrzeugs 10 gemäß der Figur 2, an welchem ein Arbeitsgerät 24 in Form einer Verteilmaschine bzw. einer Feldspritze zum Ausbringen von flüssigen und/oder festen Wirkstoffen von landwirtschaftlichen Verteilgütern angebracht ist. Das Arbeitsgerät 24 befindet sich gemäß der Figur 4B in Transportstellung.

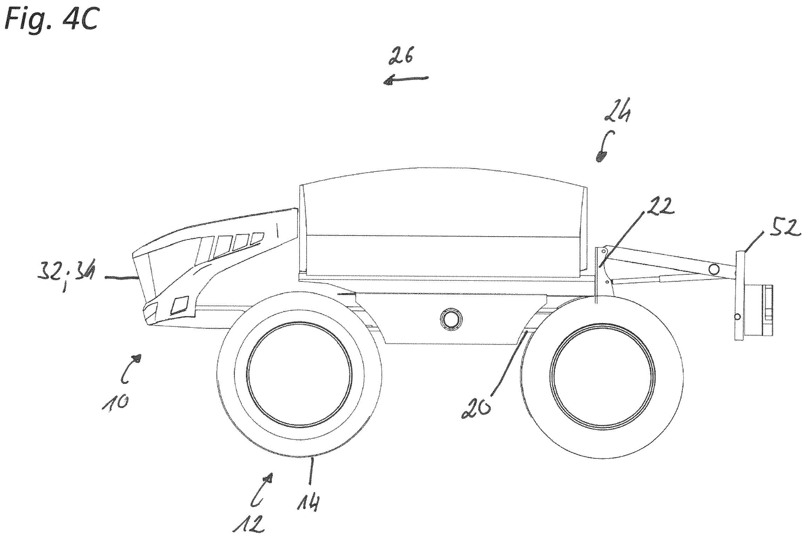

Die Figur 4C zeigt eine Seitenansicht eines autonomen landwirtschaftlichen Trägerfahrzeugs 10 gemäß der Figur 1, an welchem ein Arbeitsgerät 24 in Form einer Verteilmaschine bzw. einer Feldspritze zum Ausbringen von flüssigen und/oder festen Wirkstoffen von landwirtschaftlichen Verteilgütern angebracht ist. Das Arbeitsgerät 24 befindet sich gemäß der Figur 4C in Arbeitsstellung.

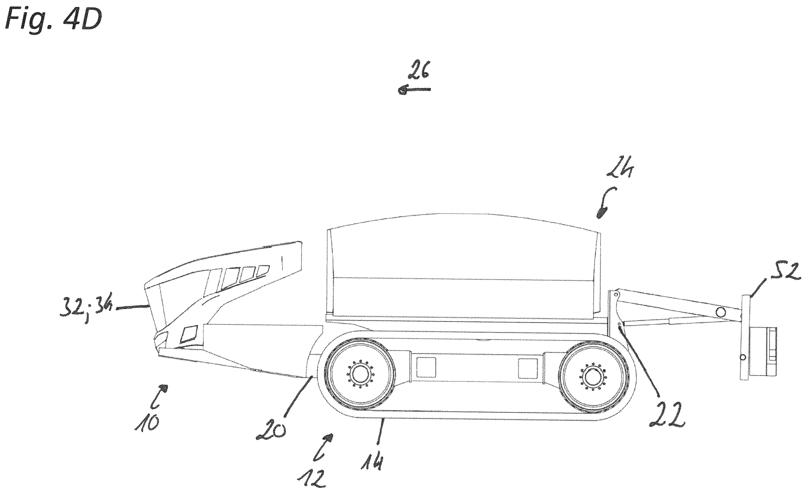

Die Figur 4D zeigt darüber hinaus eine Seitenansicht eines autonomen landwirtschaftlichen Trägerfahrzeugs 10 gemäß der Figur 2, an welchem ein Arbeitsgerät 24 in Form einer Verteilmaschine bzw. einer Feldspritze zum Ausbringen von flüssigen und/oder festen Wirkstoffen von landwirtschaftlichen Verteilgütern angebracht ist. Das Arbeitsgerät 24 befindet sich gemäß der Figur 4D in Arbeitsstellung.

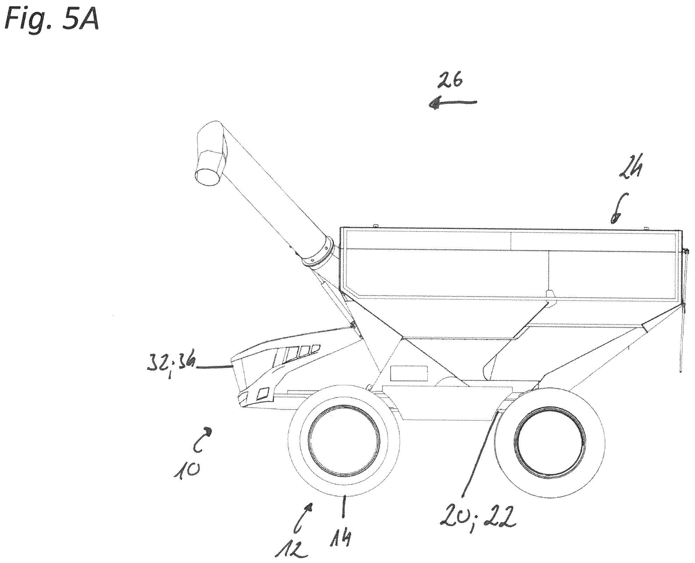

Die Figur 5A zeigt eine Seitenansicht eines autonomen landwirtschaftlichen Trägerfahrzeugs 10 gemäß der Figur 1, an welchem ein Arbeitsgerät 24 in Form eines Vorratsbehälters von landwirtschaftlichen Verteilgütern angebracht ist.

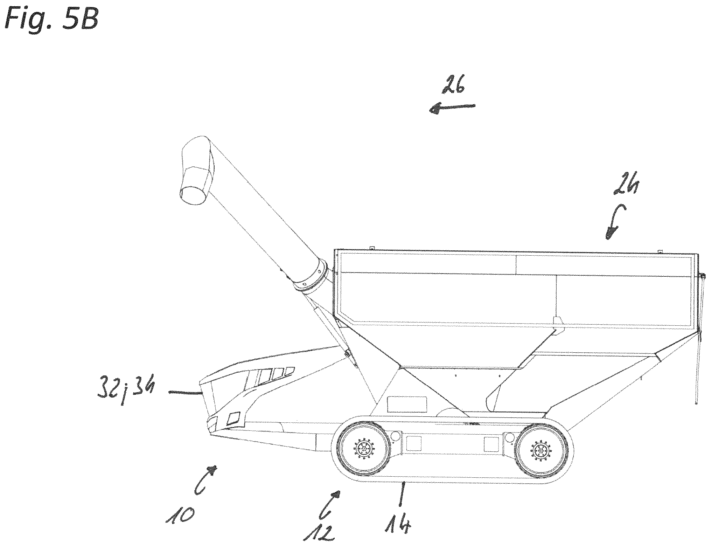

Die Figur 5B zeigt eine Seitenansicht eines autonomen landwirtschaftlichen Trägerfahrzeugs 10 gemäß der Figur 2, an welchem ein Arbeitsgerät 24 in Form eines Vorratsbehälters von landwirtschaftlichen Verteilgütern angebracht ist.

Um eine für eine Straßenfahrt zulässige Transportbreite zu erhalten ist beim Arbeitsgerät 24 gemäß der Figuren 3 vorgesehen, dass dieses zunächst ein Mittelteil 52 mit jeweils links und rechts zu diesem angeordneten Seitenteilen 58 aufweist, wobei zunächst das Mittelteil und die Seitenteile über quer zur Fahrrichtung orientierte Achsen 54 um ca. 90° bzw. um annähernd 90° nach oben verschwenkt werden und die Seitenteile 58 anschließend in Bezug auf das Mittelteil 52 um nun aufrecht verlaufende Achsen 56 nach vorne und/oder nach hinten, in eine zumindest weitgehend parallele Stellung zur Fahrtrichtung 26, verschwenkt werden.

Darüber hinaus ist für eine Überführung des Arbeitsgerätes 24 in ein Transportposition gemäß der Figur 4 vorgesehen, dass jeweils um aufrechte Achsen schwenkbar zum Mittelteil 52 links und rechts ein Seitenteil angeordnet ist. Um derartige Arbeitsgeräte 24 in eine Transportposition überführen zu können, werden die Seitenteile 58 bzw. deren Segmente vorzugsweise um aufrechte Achsen 56 zueinander verschwenkt und anschließend wiederum um aufrechte Achsen in Bezug auf das Mittelteil 52 verschwenkt.

Um Unabhängig von der Art des zumindest einen Arbeitsgerätes 24 mittels des autonomen landwirtschaftlichen Trägerfahrzeug 10 zum einen eine möglichst gleichmäßige Gewichtsverteilung auf die Räder und/oder die Raupenfahrwerke 14 zu erreichen, zudem aber auch an den Rädern und/oder Raupenfahrwerken 14 welche die jeweilige Zugkraft auf die Bodenoberfläche übertragen müssen, genügend Ballastierung zu erzeugen und darüber hinaus während der Überführung aus einer Arbeits- in eine Transportposition keine negativen Stützlasten hervorzurufen ist gemäß der Figuren 3 vorgesehen, dass die Arbeitsgeräte 24 am Trägerfahrzeug 10 mittels der Montagevorrichtungen 22 derartig angeordnet sind, dass der Schwerpunkt des Trägerfahrzeug FS bzw. die Stützlast des Trägerfahrzeug, welche durch die Gewichtskraft des Trägerfahrzeug FGT und die Gewichtskraft des Arbeitsgerätes FGA hervorgerufen wird, in Fahrtrichtung 26 zwischen den zumindest zwei hintereinander angeordneten Rädern und/oder Raupenfahrwerken 14 liegt und/oder dass dieser sich vor der hinteren Umlenkrolle 50 des Raupenfahrwerk 14 befindet.

Dies wird insbesondere dadurch erreicht, dass die Antriebseinheit 32 sich im vorderen Bereich der Rahmenkonstruktion 20 befindet und die Montagevorrichtungen 22 hinter der Antriebseinheit 32. Zudem kann dies durch verschiedene Positionen von Montagevorrichtungen 22 an der Rahmenkonstruktion 20 noch weiter verbessert werden. Der Schwerpunkt FS kann sich zwar in Abhängigkeit ob das Arbeitsgerät 24 sich in Arbeitsposition oder in Transportposition befindet zwischen den Rädern 14 und/oder den Umlenkrollen 50 verschieben, liegt jedoch dennoch immer dazwischen, bzw. liegt dieser immer vor dem hintersten Rad 14 und/oder der hintersten Umlenkrolle 50 des Raupenfahrwerk 14.

Der Schwerpunkt FS des Trägerfahrzeugs 10 ist unabhängig von der Art des Arbeitsgerätes 24 jeweils derartig definiert, dass ein Moment welches auf ein hinteres Rad 14 und/oder die hintere Umlenkrolle 50 des Raupenfahrwerk 14 wirkt in Richtung des Trägerfahrzeug 10 stets größer oder gleich ist als in Richtung des, hinter diesem Rad 14 und/oder die hintere Umlenkrolle 50 angeordneten Arbeitsgeräts 24. Wobei dies zudem unabhängig von der jeweiligen Klappposition des Arbeitsgerätes 24 ist. Um dies zu verbessern bzw. zu gewährleisten, sind die Montagevorrichtungen 22 an verschiedenen Positionen der Rahmenkonstruktion 20 angebracht.

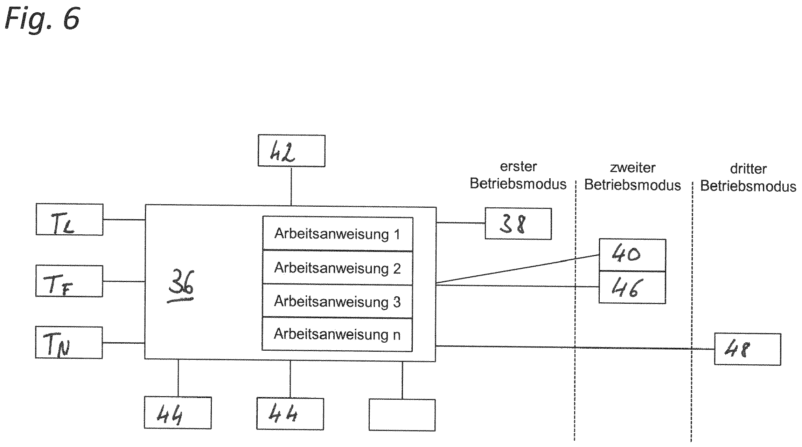

Weitere Details der Steuerung und/oder Regelung des autonomen landwirtschaftlichen Trägerfahrzeugs 10 gehen aus dem Blockschaltbild der Figur 6 hervor. Die Steuerung des Trägerfahrzeugs 10 erfolgt jeweils mittels einer Steuereinrichtung 36. In dieser Steuereinrichtung 36 sind insbesondere Positionsabhängige Arbeitsanweisungen hinterlegt. Diese Arbeitsanweisungen können bspw. definieren bzw. können Sollwertvorgaben definieren mit welcher Fahrgeschwindigkeit das Trägerfahrzeug 10 entlang der landwirtschaftlichen Fläche bzw. entlang vorweg definierter Routen bewegt werden soll und/oder mit welchem Lenkwinkel das Trägerfahrzeug 10 eine Kurve durchfahren soll. Somit können mittels der Steuereinrichtung 36 verschiedenste Elemente bzw. Stellelemente des Trägerfahrzeug 10 entsprechend der Istposition dieses angesteuert und/oder geregelt werden, bspw. die Lenkung $T_L$ und/oder die Fahrgeschwindigkeit $T_F$ oder diverse weitere Elemente $T_N$ bzw. Stellelemente des Trägerfahrzeug 10.

Die Steuereinrichtung 36 gemäß der Figur 6 ist hierbei stark vereinfacht und lediglich durch ein Rechteck dargestellt, die Steuereinrichtung 36 kann aber insbesondere mit einer elektrischen und/oder pneumatischen und/oder hydraulischen und/oder einer Kombination dieser Energie- und Signalübertragungsarten basierenden Steuerung und/oder Schaltung in Wirkverbindung stehen oder diese mit umfassen bzw. beinhalten. Die Steuereinrichtung 36 kann zudem eine oder mehrere Rechnereinheit(en) umfassen, in welchen Rechnereinheiten Steuerungsprogramme bzw. ein entsprechender Regelungsalgorithmus hinterlegt sein kann.

Die Steuereinrichtung 36 kann zudem mit einem Positionsbestimmungssystem 38 verbunden sein, bzw. verbindbar sein. Beim Positionsbestimmungssystem 38 kann es sich bspw. um ein sog. GPS (Globales Positionsbestimmungssystem) handeln. Darüber hinaus wären jedoch noch weitere bzw. andere Positionsbestimmungssysteme 38 denkbar bzw. verwendbar. Wobei mittels des Positionsbestimmungssystems 38 jeweils die aktuelle Position bzw. Istposition des Trägerfahrzeugs 10 auf einer insbesondere landwirtschaftlichen Fläche ermittelt bzw. erfasst werden kann und bspw. an die Steuereinrichtung 36 übermittelt werden kann.

Darüber hinaus ist am Trägerfahrzeug 10 und/oder am zumindest einen Arbeitsgerät 24 eine Umfeldsensorik 40 vorhanden, zur Ermittlung von im Umfeld des Trägerfahrzeug 10 vorhandenen Hindernissen und/oder Elementen. Die Umfeldsensorik 40 ist hierbei derartig ausgeführt, dass mittels dieses der gesamte Arbeitsbereich des zumindest einen landwirtschaftlichen Arbeitsgeräts 24 überwacht werden kann. Mittels der Umfeldsensorik 40 können somit bspw. Hindernisse wie Bäume, Büsche oder dergl. Pflanzliche Hindernisse und/oder Elemente erfasst werden, insbesondere jedoch auch Lebewesen wie Tiere und/oder Menschen.

Als Umfeldsensoren 40 können bspw. Laserscanner und/oder Kamerasysteme wie bspw. 3D Wärmebildkameras eingesetzt werden. Auch können 3D-Kameras und/oder 3D-Scanner und/oder 3D-Rig verwendet werden. Auch Infrarotsensoren könnten entsprechend zum Einsatz kommen. Insbesondere kommen jeweils zwei Umfeldsensoren 40 zum Einsatz. Auch können die zwei Umfeldsensoren 40 verschiedene Objekte erkennen, so dass anhand dieser wiederum ein gemeinsames Bild mittels der Steuereinrichtung 36 ermittelt werden kann. So kann auch vorgesehen sein das die zwei Umfeldsensoren 40 verschiede physikalische Eigenschaften ermitteln, aus welchen physikalischen Eigenschaften anschließend eine Auswertung über die Art des Hindernis und/oder Elemente erfolgt. Die Art kann hierbei bspw. Angaben über Lebewesen - ja/nein; Tier - ja/nein oder dergl. beinhalten.

Die Arbeitsanweisungen können bspw. durch eine Bedienperson manuell in der Steuereinrichtung 36 hinterlegt werden. Auch können die Arbeitsanweisungen zunächst mittels einer Steuerungssoftware bzw. mittels eines Simulationssystems 42 definiert werden. Die somit im Simulationssystem 42 definierten Arbeitsanweisungen können anschließend wiederum in die Steuereinrichtung 36 eingegeben werden, bzw. kann die Steuereinrichtung 36 mit dem Simulationssystem 42 verbindbar sein, wodurch wiederum die Arbeitsanweisungen entsprechend in der Steuereinrichtung 36 hinterlegt werden können.

In einer Weiterbildung können an dem zumindest einem Arbeitsgerät 24 verschiedenste Aktoren 44 zur bspw. Verteilung von landwirtschaftlichen Verteilgut und/oder zur Tiefenverstellung von Saat- und/oder Bodenbearbeitungswerkzeugen oder dergl. angebracht sein. Auch für diese Aktoren 44 können wiederum Positionsabhängige Arbeitsanweisungen in der Steuereinrichtung 36 hinterlegt sein, so dass bspw. in Abhängigkeit der aktuellen Istposition eine Ausbringmenge erhöht, verringert oder eine Ausbringung gänzlich unterbrochen wird, oder eine Arbeitstiefe erhöht oder verringert wird.

Das autonome landwirtschaftliche Trägerfahrzeug 10 kann einen ersten Betriebsmodus vorsehen, bei welchem die jeweiligen Arbeitsanweisungen jeweils auf Basis der durch das Positionsbestimmungssystem 38 ermittelten Istposition mittels der Steuereinrichtung 36 gesteuert und/oder geregelt werden.

Darüber hinaus kann das autonome landwirtschaftliche Trägerfahrzeug 10 einen zweiten Betriebsmodus vorsehen, wobei mittels der Steuereinrichtung 36 eine Übersteuerung des ersten Betriebsmodus erfolgen kann. Und wobei der zweite Betriebsmodus insbesondere auf Basis der durch die Umfeldsensorik 40 erfassten Hindernisse und/oder Elemente erfolgt. Auch kann der zweite Betriebsmodus durch mittels Sensoren 46 erfasster Fehlfunktionen der Aktoren 44 und/oder der Fahrgeschwindigkeit $T_F$ und/oder der Lenkung $T_L$ und/oder der weiteren Stellelemente des Trägerfahrzeug $F_N$ definiert werden.

Des Weiteren kann ein dritter Betriebsmodus vorgesehen sein, wobei mittels der Steuereinrichtung eine Übersteuerung des ersten Betriebsmodus und des zweiten Betriebsmodus erfolgen kann. Und wobei der dritte Betriebsmodus insbesondere auf Basis durch mittels einer Bedienperson vorgegebener Steuerungsbefehle 48 erfolgt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale der unabhängigen Ansprüche jeweils unabhängig voneinander offenbart. Zusätzlich sind auch die Merkmale der Unteransprüche unabhängig von sämtlichen Merkmalen des jeweiligen unabhängigen Anspruchs 1 oder des Verfahrensanspruchs 22 offenbart.

## Bezugszeichenliste

10 Trägerfahrzeug
12 Fahrwerk
14 Räder; Raupenfahrwerk
16 Lenkzylinder
18 Achse
20 Rahmenkonstruktion
22 Montagevorrichtung
24 Arbeitsgerät
26 Fahrtrichtung
28 Anhängevorrichtung
30 Zylinder
32 Antriebseinheit
34 Antriebsstrang
36 Steuereinrichtung
38 Positionsbestimmungssystem
40 Umfeldsensorik
42 Steuerungssoftware, Simulationssystem
44 Aktoren
46 Sensoren
48 Steuerungsbefehl
50 Umlenkrolle
52 Mittelteil
54 quer zur Fahrrichtung orientierte Achse
56 aufrechte Achse Arbeitsgerät
58 Seitenteil

$T_L$ Lenkung Trägerfahrzeug
$T_F$ Fahrgeschwindigkeit Trägerfahrzeug
$T_N$ Element Trägerfahrzeug; Stellelement Trägerfahrzeug

FS Stützlast, Schwerpunkt
FGT Gewichtskraft Trägerfahrzeug
FGA Gewichtskraft Arbeitsgerät

Die Erfindung umfasst insbesondere auch folgende Gegenstände:

1. Autonomes landwirtschaftliches Trägerfahrzeug (10), zum Tragen von zumindest einem landwirtschaftlichen Arbeitsgerät (24), mit einer Rahmenkonstruktion (20), und einem an der Rahmenkonstruktion (20) angebrachten Fahrwerk (12), wobei das Fahrwerk (12) zumindest zwei lenkbare Räder und/oder Raupenfahrwerke (14) aufweist, wobei der Rahmenkonstruktion (20) zumindest eine Montagevorrichtung (22) zur Verbindung mit dem zumindest einem landwirtschaftlichen Arbeitsgerät (24) zugeordnet ist, und mit einer Umfeldsensorik (40) zur Ermittlung von im Umfeld des Trägerfahrzeug (10) vorhandenen Hindernissen und/oder Elementen, sowie mit einer Steuereinrichtung (36) zum Steuern des Trägerfahrzeug (10) und/oder des zumindest einen Arbeitsgerät (24), wobei die Steuereinrichtung (36) mit einem, eine Position erfassenden und/oder ausgebenden Positionsbestimmungssystem (38) verbindbar ist, dadurch gekennzeichnet, dass in der Steuereinrichtung (36) vorzugsweise positionsabhängige Arbeitsanweisungen für das Trägerfahrzeug (10) hinterlegt sind.

2. Trägerfahrzeug (10) nach Punkt 2, dadurch gekennzeichnet, dass das zumindest eine Arbeitsgerät (24) eine Feldspritze und/oder ein Sägerät und/oder ein Düngerstreuer und/oder ein Bodenbearbeitungsgerät ist.

3. Trägerfahrzeug (10) nach Punkt 1 oder 2, dadurch gekennzeichnet, dass sich das Fahrwerk (12) aus zumindest zwei gegenüberliegenden Rädern und/oder Raupenfahrwerken (14) zusammensetzt.

4. Trägerfahrzeug (10) nach einem der vorhergehenden Punkte, dadurch gekennzeichnet, dass zumindest ein Teil der Räder und/oder Raupenfahrwerke (14) um aufrechte Achsen lenkbar zur Rahmenkonstruktion (20) angeordnet sind.

5. Trägerfahrzeug (10) nach einem der vorhergehenden Punkte, dadurch gekennzeichnet, dass das Fahrwerk (12) zumindest vier Räder umfasst, welche jeweils auf zwei hintereinander angeordnete Achsen verteilt sind, wobei zumindest zwei Räder lenkbar sind.

6. Trägerfahrzeug (10) nach einem der vorhergehenden Punkte, dadurch gekennzeichnet, dass sich das Fahrwerk (12) aus zumindest zwei gegenüberliegenden Räder und zwei gegenüberliegenden Raupenfahrwerken (14) zusammensetzt, wobei zumindest die Räder und/oder die Raupenfahrwerke (14) lenkbar sind.

7. Trägerfahrzeug (10) nach einem der vorhergehenden Punkte, dadurch gekennzeichnet, dass die Lenkung als Zweiradlenkung und/oder als Hinterradlenkung und/oder als Allradlenkung ausgeführt ist.

8. Trägerfahrzeug (10) nach einem der vorhergehenden Punkte, dadurch gekennzeichnet, dass die Räder und/oder Raupenfahrwerke (14) höhenverstellbar zur Rahmenkonstruktion (20) sind.

9. Trägerfahrzeug (10) nach einem der vorhergehenden Punkte, dadurch gekennzeichnet, dass die Spurweite des Fahrwerks (12) verstellbar ist.

10. Trägerfahrzeug (10) nach Punkt 8 oder 9, dadurch gekennzeichnet, dass eine Verstellung auf Basis einer positionsabhängigen Arbeitsanweisung erfolgt und/oder dass ein Verstellung auf Basis von am Trägerfahrzeug (10) und/oder am zumindest einem Arbeitsgerät (24) angebrachter Sensoren oder Messmittel erfolgt.

11. Trägerfahrzeug (10) nach einem der vorhergehenden Punkte, dadurch gekennzeichnet, dass dieses eine Antriebseinheit (32) mit einem Antriebsstrang (34) aufweist, mittels welches Antriebsstrang (34) das Fahrwerk (12) mit verschiedenen Fahrgeschwindigkeiten betrieben werden kann.

12. Trägerfahrzeug (10) nach Punkt 11, dadurch gekennzeichnet, dass der Antriebsstrang (34) elektrisch und/oder hydraulisch betrieben wird und/oder das dieser als Hybridantrieb ausgeführt ist.

13. Trägerfahrzeug (10) nach einem der vorhergehenden Punkte, dadurch gekennzeichnet, dass die Montagevorrichtung (22) zumindest als 2-Punkt Aufnahme oder als 3-Punkt Aufnahme ausgeführt ist und dass das Arbeitsgerät (24) mittels der Montagevorrichtung (22) zumindest in Fahrrichtung abschnittweise fest mit der Rahmenkonstruktion (20) verbunden ist.

14. Trägerfahrzeug (10) nach einem der vorhergehenden Punkte, dadurch gekennzeichnet, dass die Verbindung zwischen dem Trägerfahrzeug (10) und dem zumindest einem Arbeitsgerät (24) mittels der Montagevorrichtung (22) derartig erfolgt, dass das Arbeitsgerät (24) und/oder dessen Arbeitswerkzeuge in dessen Höhe verstellbar ist und/oder dass das Arbeitsgerät (24) in Fahrrichtung in einem Winkel verstellbar ist der kleiner als 25° oder 15° oder 5° ist.

15. Trägerfahrzeug (10) nach einem der vorhergehenden Punkte, dadurch gekennzeichnet, dass die Montagevorrichtung (22) Schnittstellen zur Verbindung der elektrischen und/oder hydraulischen und/oder pneumatischen Elemente des Trägerfahrzeugs (10) und des zumindest einen Arbeitsgerät (24) umfasst.

16. Trägerfahrzeug (10) nach einem der vorhergehenden Punkte, dadurch gekennzeichnet, dass mittels der Umfeldsensorik (40) der gesamte Arbeitsbereich des Arbeitsgeräts (24) erfasst wird.

17. Trägerfahrzeug (10) nach einem der vorhergehenden Punkte, dadurch gekennzeichnet, dass die Umfeldsensorik (40) zumindest zwei Umfeldsensoren umfasst.

18. Trägerfahrzeug (10) nach Punkt 17, dadurch gekennzeichnet, dass die zumindest zwei Umfeldsensoren verschiedene physikalische Messeigenschaften aufweisen und/oder verschiedene physikalische Eigenschaften erfassen.

19. Trägerfahrzeug (10) nach einem der vorhergehenden Punkte, dadurch gekennzeichnet, dass in der Steuereinrichtung (36) Sollwerte für die durch die Umfeldsensorik (40) ermittelte Art des Hindernis und/oder Elements hinterlegt sind.

20. Trägerfahrzeug (10) nach einem der vorhergehenden Punkte, dadurch gekennzeichnet, dass die Arbeitsanweisungen zumindest Sollwertvorgaben für die Lenkung und/oder die Fahrgeschwindigkeit beinhalten.

21. Trägerfahrzeug (10) nach einem der vorhergehenden Punkte, dadurch gekennzeichnet, dass die Arbeitsanweisungen Sollwertangaben für festgelegte Routen umfassen.

22. Trägerfahrzeug (10) nach einem der vorhergehenden Punkte, dadurch gekennzeichnet, dass die Arbeitsanweisungen mittels eines Simulationssystem (42) in der Steuereinrichtung (36) hinterlegt werden, wobei das Simulationssystem mit der Steuereinrichtung verbindbar ist.

23. Trägerfahrzeug (10) nach einem der vorhergehenden Punkte, dadurch gekennzeichnet, dass am zumindest einem Arbeitsgerät (24) zumindest ein Aktor angebracht ist, wobei die Arbeitsanweisungen Sollwertvorgaben für die Aktoren (44) beinhalten.

24. Trägerfahrzeug (10) nach einem der vorhergehenden Punkte, dadurch gekennzeichnet, dass sich links und rechts zum Trägerfahrzeug (10) Träger und/oder Seitenteile (58) erstrecken welche jeweils in Richtung des Trägerfahrzeug (10) derartig verschwenkbar sind, dass mittels des Trägerfahrzeug (10) und des Arbeitsgerät (24) eine für eine Straßenfahrt zulässige Transportbreite eingehalten wird.

25. Trägerfahrzeug (10) nach einem der vorhergehenden Punkte, dadurch gekennzeichnet, dass sich das Arbeitsgerät (24) aus einem Mittelteil (52) und seitlich zu diesem angeordneten Seitenteilen (58) zusammensetzt, wobei zunächst das Mittelteil (52) und die Seitenteile (58) über quer zur Fahrrichtung orientierte Achsen (54) um zumindest annähernd 90° nach oben verschwenkt werden und die Seitenteile (58) anschließend in Bezug auf das Mittelteil (52) um aufrecht verlaufende Achsen (56) nach vorne und/oder nach hinten, in eine zumindest weitgehend parallele Stellung zur Fahrtrichtung (26), verschwenkt werden.

26. Trägerfahrzeug (10) nach einem der vorhergehenden Punkte, dadurch gekennzeichnet, dass die Antriebseinheit (32) in Fahrtrichtung (26) gegenüberliegend zum zumindest einem Arbeitsgerät (24) angeordnet ist insbesondere vor dem Arbeitsgerät (24).

27. Trägerfahrzeug (10) nach einem der vorhergehenden Punkte, dadurch gekennzeichnet, dass die Räder und/oder Raupenfahrwerke (14) seitlich zur Antriebseinheit (32) angeordnet sind.

28. Trägerfahrzeug (10) nach einem der vorhergehenden Punkte, dadurch gekennzeichnet, dass der Schwerpunkt Fs des Trägerfahrzeugs (10) derartig definiert ist, dass ein Moment welches auf ein hinteres Rad (14) und/oder die hintere Umlenkrolle (50) des Raupenfahrwerk (14) wirkt in Richtung des Trägerfahrzeug (10) größer oder gleich ist als in Richtung des, hinter diesem Rad (14) und/oder die hintere Umlenkrolle angeordneten Arbeitsgeräts (24).

29. Trägerfahrzeug (10) nach einem der vorhergehenden Punkte, dadurch gekennzeichnet, dass die Träger und/oder Seitenteile derartig verschwenkt werden, dass diese sich in einer Transportposition oberhalb zumindest einzelner Räder und/oder der Raupenfahrwerke befinden oder zumindest abschnittweise oberhalb einzelner Räder und/oder Raupenfahrwerke.

30. Trägerfahrzeug (10) nach einem der vorhergehenden Punkte, dadurch gekennzeichnet, dass das Trägerfahrzeug (10) einen ersten Betriebsmodus umfasst, wobei im ersten Betriebsmodus die Arbeitsanweisungen auf Basis der durch das Positionsbestimmungssystem (38) ermittelten Istposition mittels der Steuereinrichtung (36) gesteuert und/oder geregelt werden.

31. Trägerfahrzeug (10) nach einem der vorhergehenden Punkte, dadurch gekennzeichnet, dass das Trägerfahrzeug (10) einen zweiten Betriebsmodus umfasst, wobei mittels der Steuereinrichtung (36) eine Übersteuerung des ersten Betriebsmodus erfolgt.

32. Trägerfahrzeug (10) nach einem der vorhergehenden Punkte, dadurch gekennzeichnet, dass der zweite Betriebsmodus insbesondere auf Basis der durch die Umfeldsensorik (40) erfassten Hindernisse und/oder Elemente definiert wird und/oder das der zweite Betriebsmodus durch mittels Sensoren erfasster Fehlfunktionen der Aktoren (44) und/oder der Fahrgeschwindigkeit und/oder der Lenkung definiert wird.

33. Trägerfahrzeug (10) nach einem der vorhergehenden Punkte, dadurch gekennzeichnet, dass das Trägerfahrzeug (10) einen dritten Betriebsmodus umfasst, wobei mittels der Steuereinrichtung (36) eine Übersteuerung des ersten Betriebsmodus und des zweiten Betriebsmodus erfolgt.

34. Trägerfahrzeug (10) nach einem der vorhergehenden Punkte, dadurch gekennzeichnet, dass der dritte Betriebsmodus insbesondere auf Basis durch mittels einer Bedienperson vorgegebene Steuerungsbefehle und/oder Arbeitsanweisungen definiert ist.

35. Trägerfahrzeug (10) nach einem der vorhergehenden Punkte, dadurch gekennzeichnet, dass der dritte Betriebsmodus bspw. eine Koppelung mit einem Eingabegerät umfasst.

36. Trägerfahrzeug (10) nach einem der vorhergehenden Punkte, dadurch gekennzeichnet, dass das Eingabegerät eine am Trägerfahrzeug (10) angebrachte Bedienkonsole umfasst und/oder dass das Eingabegerät ein Bedientableau ist und/oder dass das Eingabegerät ein mobiles Endgerät ist wobei das Eingabegerät mittels einer Drahtverbindung und/oder mittels einer drahtlosen Verbindung mit der Steuereinrichtung (36) verbindbar ist.

37. Trägerfahrzeug (10) nach einem der vorhergehenden Punkte, dadurch gekennzeichnet, dass das Trägerfahrzeug (10) bei einer unterbrochenen und/oder fehlerhaften Kommunikation, zwischen der Steuereinrichtung (36) und dem Positionsbestimmungssystem (38) oder zwischen der Steuereinrichtung (36) und dem Eingabegerät oder innerhalb der Steuereinrichtung (36) des Trägerfahrzeug (10) und/oder des zumindest einem Arbeitsgeräts (24), in einen sicheren insbesondere Betriebssicheren Zustand überführt wird.

38. Trägerfahrzeug (10) nach einem der vorhergehenden Punkte, dadurch gekennzeichnet, dass am Eingabegerät und/oder am Trägerfahrzeug (10) ein NOT-Aus Schalter und/oder Element vorhanden ist, wobei der NOT-Aus insbesondere den dritten Betriebsmodus bildet.

39. Trägerfahrzeug (10) nach einem der vorhergehenden Punkte, dadurch gekennzeichnet, dass die Übergänge zwischen den Arbeitsanweisungen fließend erfolgen.

40. Trägerfahrzeug (10) nach einem der vorhergehenden Punkte, dadurch gekennzeichnet, dass auf Basis des Positionsbestimmungssystem (38) und/oder der in der Steuereinrichtung (36) hinterlegten Routen die künftig definierte Fahrgeschwindigkeit und/oder der künftig erforderliche Lenkwinkel hinterlegt ist, und eine Beschleunigung oder Verzögerung bereits in einer vorhergehenden Arbeitsanweisung derartig erfolgt, dass bei Erreichung der Sollposition für eine weitere Arbeitsanweisung bereits die Sollfahrgeschwindigkeit erreicht ist.

41. Trägerfahrzeug (10) nach einem der vorhergehenden Punkte, dadurch gekennzeichnet, dass der Trägerfahrzeug (10) und/oder der Rahmenkonstruktion (20) eine Anhängevorrichtung (28) zugeordnet ist.

42. Verfahren zur Steuerung und/oder Regelung eines autonomen landwirtschaftlichen Trägerfahrzeug (10), mit einer Rahmenkonstruktion (20), und einem an der Rahmenkonstruktion (20) angebrachten Fahrwerk (12), wobei das Fahrwerk (12) zumindest zwei lenkbare Räder und/oder Raupenfahrwerke (14) aufweist, wobei der Rahmenkonstruktion (20) zumindest eine Montagevorrichtung (22) zur Verbindung mit dem zumindest einem landwirtschaftlichen Arbeitsgerät (24) zugeordnet ist, gekennzeichnet durch die Verfahrensschritte:

- Ermittlung von im Umfeld des Trägerfahrzeug (10) vorhandener Hindernisse und/oder Elemente mittels einer Umfeldsensorik (40),
- Steuern des Trägerfahrzeug (10) und/oder des zumindest einen Arbeitsgerät (24) mittels einer Steuereinrichtung (36), wobei die Steuereinrichtung (36) mit einem, eine Position erfassenden und/oder ausgebenden Positionsbestimmungssystem (38) verbindbar ist und wobei in der Steuereinrichtung (36) vorzugsweise positionsabhängige Arbeitsanweisungen für das Trägerfahrzeug (10) hinterlegt sind.

**Patentansprüche**

1. Autonomes landwirtschaftliches Trägerfahrzeug (10), zum Tragen von zumindest einem landwirtschaftlichen Arbeitsgerät (24), mit einer Rahmenkonstruktion (20), und einem an der Rahmenkonstruktion (20) angebrachten Fahrwerk (12), wobei das Fahrwerk (12) zumindest zwei lenkbare Räder und/oder Raupenfahrwerke (14) aufweist, wobei der Rahmenkonstruktion (20) zumindest eine Montagevorrichtung (22) zur Verbindung mit dem zumindest einem landwirtschaftlichen Arbeitsgerät (24) zugeordnet ist, und mit einer Umfeldsensorik (40) zur Ermittlung von im Umfeld des Trägerfahrzeug (10) vorhandenen Hindernissen und/oder Elementen, sowie mit einer Steuereinrichtung (36) zum Steuern des Trägerfahrzeug (10) und/oder des zumindest einen Arbeitsgerät (24), wobei die Steuereinrichtung (36) mit einem, eine Position erfassenden und/oder ausgebenden Positionsbestimmungssystem (38) verbindbar ist, **dadurch gekennzeichnet, dass** in der Steuereinrichtung (36) vorzugsweise positionsabhängige Arbeitsanweisungen für das Trägerfahrzeug (10) hinterlegt sind.

2. Trägerfahrzeug (10) nach Anspruch 1, **dadurch gekennzeichnet, dass** das zumindest eine Arbeitsgerät (24) eine Feldspritze und/oder ein Sägerät und/oder ein Düngerstreuer und/oder ein Bodenbearbeitungsgerät ist.

3. Trägerfahrzeug (10) nach Anspruch 1 oder 2, **dadurch gekennzeichnet, dass** sich das Fahrwerk (12) aus zumindest zwei gegenüberliegenden Rädern und/oder Raupenfahrwerken (14) zusammensetzt.

4. Trägerfahrzeug (10) nach einem der vorhergehenden Ansprüche, **dadurch gekennzeichnet, dass** zumindest ein Teil der Räder und/oder Raupenfahrwerke (14) um aufrechte Achsen lenkbar zur Rahmenkonstruktion (20) angeordnet sind.

5. Trägerfahrzeug (10) nach einem der vorhergehenden Ansprüche, **dadurch gekennzeichnet, dass** das Fahrwerk (12) zumindest vier Räder umfasst, welche jeweils auf zwei hintereinander angeordnete Achsen verteilt sind, wobei zumindest zwei Räder lenkbar sind.

6. Trägerfahrzeug (10) nach einem der vorhergehenden Ansprüche, **dadurch gekennzeichnet, dass** die Lenkung als Zweiradlenkung und/oder als Hinterradlenkung und/oder als Allradlenkung ausgeführt ist.

7. Trägerfahrzeug (10) nach einem der vorhergehenden Ansprüche, **dadurch gekennzeichnet, dass** dieses eine Antriebseinheit (32) mit einem Antriebsstrang (34) aufweist, mittels welches Antriebsstrang (34) das Fahrwerk (12) mit verschiedenen Fahrgeschwindigkeiten betrieben werden kann.

8. Trägerfahrzeug (10) nach einem der vorhergehenden Ansprüche, **dadurch gekennzeichnet, dass** die Montagevorrichtung (22) zumindest als 2-Punkt Aufnahme oder als 3-Punkt Aufnahme ausgeführt ist und dass das Arbeitsgerät (24) mittels der Montagevorrichtung (22) zumindest in Fahrrichtung abschnittweise fest mit der Rahmenkonstruktion (20) verbunden ist, und/oder dass vorzugsweise der Trägerfahrzeug (10) und/oder der Rahmenkonstruktion (20) eine Anhängevorrichtung (28) zugeordnet ist

9. Trägerfahrzeug (10) nach einem der vorhergehenden Ansprüche, **dadurch gekennzeichnet, dass** mittels der Umfeldsensorik (40) der gesamte Arbeitsbereich des Arbeitsgeräts (24) erfasst wird, wobei vorzugsweise die Umfeldsensorik (40) zumindest zwei Umfeldsensoren umfasst, wobei vorzugsweise die zumindest zwei Umfeldsensoren verschiedene physikalische Messeigenschaften aufweisen und/oder verschiedene physikalische Eigenschaften erfassen.

10. Trägerfahrzeug (10) nach einem der vorhergehenden Ansprüche, **dadurch gekennzeichnet, dass** in der Steuereinrichtung (36) Sollwerte für die durch die Umfeldsensorik (40) ermittelte Art des Hindernis und/oder Elements hinterlegt sind.

11. Trägerfahrzeug (10) nach einem der vorhergehenden Ansprüche, **dadurch gekennzeichnet, dass**

   - die Arbeitsanweisungen zumindest Sollwertvorgaben für die Lenkung und/oder die Fahrgeschwindigkeit beinhalten, und/oder
   - die Arbeitsanweisungen Sollwertangaben für festgelegte Routen umfassen.

12. Trägerfahrzeug (10) nach einem der vorhergehenden Ansprüche, **dadurch gekennzeichnet, dass** am zumindest einem Arbeitsgerät (24) zumindest ein Aktor angebracht ist, wobei die Arbeitsanweisungen Sollwertvorgaben für die Aktoren (44) beinhalten.

13. Trägerfahrzeug (10) nach einem der vorhergehenden Ansprüche, **dadurch gekennzeichnet, dass** sich links und rechts zum Trägerfahrzeug (10) Träger und/oder Seitenteile (58) erstrecken welche jeweils in Richtung des Trägerfahrzeug (10) derartig verschwenkbar sind, dass mittels des Trägerfahrzeug (10) und des Arbeitsgerät (24) eine für eine Straßenfahrt zulässige Transportbreite eingehalten wird.

14. Trägerfahrzeug (10) nach einem der vorhergehenden Ansprüche, **dadurch gekennzeichnet, dass** der Schwerpunkt Fs des Trägerfahrzeugs (10) derartig definiert ist, dass ein Moment welches auf ein hinteres Rad (14) und/oder die hintere Umlenkrolle (50) des Raupenfahrwerk (14) wirkt in Richtung des Trägerfahrzeug (10) größer oder gleich ist als in Richtung des, hinter diesem Rad (14) und/oder die hintere Umlenkrolle angeordneten Arbeitsgeräts (24).

15. Trägerfahrzeug (10) nach einem der vorhergehenden Ansprüche, **dadurch gekennzeichnet, dass** das Trägerfahrzeug (10) einen ersten Betriebsmodus umfasst, wobei im ersten Betriebsmodus die Arbeitsanweisungen auf Basis der durch das Positionsbestimmungssystem (38) ermittelten Istposition mittels der Steuereinrichtung (36) gesteuert und/oder geregelt werden.

16. Trägerfahrzeug (10) nach einem der vorhergehenden Ansprüche, **dadurch gekennzeichnet, dass** das Trägerfahrzeug (10) einen zweiten Betriebsmodus umfasst, wobei mittels der Steuereinrichtung (36) eine Übersteuerung des ersten Betriebsmodus erfolgt, wobei vorzugsweise der zweite Betriebsmodus insbesondere auf Basis der durch die Umfeldsensorik (40) erfassten Hindernisse und/oder Elemente definiert wird und/oder das der zweite Betriebsmodus durch mittels Sensoren erfasster Fehlfunktionen der Aktoren (44) und/oder der Fahrgeschwindigkeit und/oder der Lenkung definiert wird.

17. Trägerfahrzeug (10) nach einem der vorhergehenden Ansprüche, **dadurch gekennzeichnet, dass** das Trägerfahrzeug (10) einen dritten Betriebsmodus umfasst, wobei mittels der Steuereinrichtung (36) eine Übersteuerung des ersten Betriebsmodus und des zweiten Betriebsmodus erfolgt, wobei vorzugsweise der dritte Betriebsmodus insbesondere auf Basis durch mittels einer Bedienperson vorgegebene Steuerungsbefehle und/oder Arbeitsanweisungen definiert ist.

18. Trägerfahrzeug (10) nach einem der vorhergehenden Ansprüche, **dadurch gekennzeichnet, dass** der dritte Betriebsmodus bspw. eine Koppelung mit einem Eingabegerät umfasst.

19. Trägerfahrzeug (10) nach einem der vorhergehenden Ansprüche, **dadurch gekennzeichnet, dass** das Eingabegerät eine am Trägerfahrzeug (10) angebrachte Bedienkonsole umfasst und/oder dass das Eingabegerät ein Bedientableau ist und/oder dass das Eingabegerät ein mobiles Endgerät ist wobei das Eingabegerät mittels einer Drahtverbindung und/oder mittels einer drahtlosen Verbindung mit der Steuereinrichtung (36) verbindbar ist.

20. Trägerfahrzeug (10) nach einem der vorhergehenden Ansprüche, **dadurch gekennzeichnet, dass** das Trägerfahrzeug (10) bei einer unterbrochenen und/oder fehlerhaften Kommunikation, zwischen der Steuereinrichtung (36) und dem Positionsbestimmungssystem (38) oder zwischen der Steuereinrichtung (36) und dem Eingabegerät oder innerhalb der Steuereinrichtung (36) des Trägerfahrzeug (10) und/oder des zumindest einem Arbeitsgeräts (24), in einen sicheren insbesondere Betriebssicheren Zustand überführt wird.

21. Trägerfahrzeug (10) nach einem der vorhergehenden Ansprüche, **dadurch gekennzeichnet, dass** am Eingabegerät und/oder am Trägerfahrzeug (10) ein NOT-Aus Schalter und/oder Element vorhanden ist, wobei der NOT-Aus insbesondere den dritten Betriebsmodus bildet.

22. Verfahren zur Steuerung und/oder Regelung eines autonomen landwirtschaftlichen Trägerfahrzeug (10), mit einer Rahmenkonstruktion (20), und einem an der Rahmenkonstruktion (20) angebrachten Fahrwerk (12), wobei das Fahrwerk (12) zumindest zwei lenkbare Räder und/oder Raupenfahrwerke (14) aufweist, wobei der Rahmenkonstruktion (20) zumindest eine Montagevorrichtung (22) zur Verbindung mit dem zumindest einem landwirtschaftlichen Arbeitsgerät (24) zugeordnet ist, **gekennzeichnet durch** die Verfahrensschritte:

    - Ermittlung von im Umfeld des Trägerfahrzeug (10) vorhandener Hindernisse und/oder Elemente mittels einer Umfeldsensorik (40),
- Steuern des Trägerfahrzeug (10) und/oder des zumindest einen Arbeitsgerät (24) mittels einer Steuereinrichtung (36), wobei die Steuereinrichtung (36) mit einem, eine Position erfassenden und/oder ausgebenden Positionsbestimmungssystem (38) verbindbar ist und wobei in der Steuereinrichtung (36) vorzugsweise positionsabhängige Arbeitsanweisungen für das Trägerfahrzeug (10) hinterlegt sind.

Fig. 1A

Fig. 1B

Fig. 1C

EP 4 292 420 A2

Fig. 1D

Fig. 2A

EP 4 292 420 A2

Fig. 2B

Fig. 2C

Fig. 2D

Fig. 3A

EP 4 292 420 A2

Fig. 3B

Fig. 3C

Fig. 3D

FGT

FGA

24

26

22

54

32;34

10

12  14

FS

50

EP 4 292 420 A2

Fig. 3E

EP 4 292 420 A2

Fig. 4A

Fig. 4B

Fig. 4C

EP 4 292 420 A2

Fig. 4D

Fig. 5A

Fig. 5B

Fig. 6